(19) Europäisches Patentamt / European Patent Office / Office européen des brevets

(11) **EP 3 556 221 A1**

(12) **EUROPEAN PATENT APPLICATION**
published in accordance with Art. 153(4) EPC

(43) Date of publication:
**23.10.2019 Bulletin 2019/43**

(21) Application number: **18897871.2**

(22) Date of filing: **03.07.2018**

(51) Int Cl.:
*A23L 5/00* (2016.01)   *A23L 5/30* (2016.01)
*A23L 19/00* (2016.01)   *A23L 27/00* (2016.01)
*A23L 27/10* (2016.01)

(86) International application number:
**PCT/JP2018/025135**

(87) International publication number:
**WO 2019/138596 (18.07.2019 Gazette 2019/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.01.2018  JP 2018003783**

(71) Applicant: **Mizkan Holdings Co., Ltd.
Handa-shi, Aichi 475-8585 (JP)**

(72) Inventors:
• **HIGUCHI, Tatsuya**
  **Handa-shi, Aichi 475-8585 (JP)**
• **IHARA, Junichiro**
  **Handa-shi, Aichi 475-8585 (JP)**

(74) Representative: **Mewburn Ellis LLP
City Tower
40 Basinghall Street
London EC2V 5DE (GB)**

(54) **PASTE CONTAINING FOOD MICROPARTICLES, AND METHOD FOR PRODUCING SAME**

(57)   To provide a composition having a variety of utilization properties, with good shape retainability and excellent adhesion property, in a composition containing diverse foods.

A paste containing fine food particles, comprising fine food particles of one or more selected from the group consisting of a seed, grain, a legume, an alga, a vegetable and a fruit, and an oil/fat, wherein the paste satisfies all of (1) to (5) and satisfies one or more of (6-1) to (6-3):
(1) a content of fine food particles is 15% by mass or more and 85% by mass or less;
(2) a total oil/fat proportion is 20% by mass or more and 75% by mass or less;
(3) when ultrasonication is carried out, a modal diameter after the treatment is 0.3 $\mu$m or more and 200 $\mu$m or less;
(4) a water content is 20% by mass or more and 80% by mass or less;
(5) a maximum particle size is larger than 100 $\mu$m;
(6-1) a contact angle on a clean glass surface placed horizontally at a measurement temperature of 20°C is 40° or more and 160° or less;
(6-2) a sliding angle on a clean glass surface at a measurement temperature of 20°C is 50° or more; and
(6-3) an advancing contact angle on a clean glass surface at a measurement temperature of 20°C and a tilt angle of 45° is 50° or more.

EP 3 556 221 A1

**Description**

Technical Field

The present invention relates to a paste containing fine food particles, and a method for producing the same.

Background Art

Conventionally, compositions including a food containing a variety of active ingredients, such as vegetables, as fine particles have been desired to be used for diverse purposes. Reports have been made on: for example, a seasoning containing pulverized green and yellow vegetables obtained by pulverizing green and yellow vegetables in the presence of an oil (Patent Literature 1); a spread food obtained by pulverizing a non-nut plant material to generate powder with an average particle diameter of less than about 100 $\mu$m, and then subjecting the powder with an average particle diameter of less than about 100 $\mu$m to an elevated temperature (Patent Literature 2); and the like. In addition, as a size reduction technology of a food, reports have been made on: a paste of a finely pulverized seed with a testa characterized by comprising a testa, a seed and an edible oil and having a 50% integrated diameter (median diameter) of the solid content of 4 to 15$\mu$m (Patent Literature 3); a method for producing an ultrafinely pulverized natural product obtained by ultrafinely pulverizing a natural product having a moisture content of 5% by weight or less and a maximum particle size of 5,000 $\mu$m or less in an organic medium into a maximum particle size of 30 $\mu$m or less through one step pulverization with an ultrafine pulverizing machine having a grinding function (Patent Literature 4); and a method for producing an ultrafinely pulverized product of a natural product characterized by that the finely pulverized product having a largest particle diameter of 100 $\mu$m or less is obtained through one step wet pulverization using a whole substance of a natural product in the dry state as a raw material and an ultrafine pulverizing machine having a grinding function (Patent Literature 5).

Citation List

Patent Literature

    Patent Literature 1: JP-A-2006-141291
    Patent Literature 2: JP-A-2009-543562
    Patent Literature 3: JP-A-2004-159606
    Patent Literature 4: JP-A-2003-144949
    Patent Literature 5: JP-A-2007-268515

Summary of Invention

Technical Problem

However, in the means of Patent Literature 1, size reduction is insufficient, and the obtained composition does not have shape retainability. In Patent Literatures 2 and 3 as well, obtained compositions do not have an appropriate water content, and do not have properties of the paste of the present invention. Moreover, in compositions obtained in Patent Literatures 4 and 5, a maximum particle size thereof before ultrasonication is not as large as that defined in the present invention, and they do not have properties of the paste of the present invention. As such, even these means could not achieve a composition having properties with a satisfactory shape retainability and excellent adhesion property as well.

Solution to Problem

Accordingly, the present inventors have found that when a composition contains fine particles of diverse seeds, grains, legumes, vegetables, fruits, algae and the like, water, and an oil/fat at a certain quantitative ratio, by adjusting properties such as the water content and total oil/fat proportion of the composition, and the modal diameter of the composition, diverse seeds, grains, legumes, vegetables, fruits, algae and the like are stably retained to provide a paste with both shape retainability and adhesion property that can be used for diverse purposes and also have industrially preferable properties, thereby completing the present invention.
That is, the present invention provides the following inventions.

**EP 3 556 221 A1**

[1] A paste containing fine food particles, comprising fine food particles of one or more selected from the group consisting of a seed, grain, a legume, an alga, a vegetable and a fruit, and an oil/fat, wherein the paste satisfies all of (1) to (5) and satisfies one or more of (6-1) to (6-3):

> (1) a content of fine food particles is 15% by mass or more and 85% by mass or less;
> (2) a total oil/fat proportion is 20% by mass or more and 75% by mass or less;
> (3) when ultrasonication is carried out, a modal diameter after the treatment is 0.3 μm or more and 200 μm or less;
> (4) a water content is 20% by mass or more and 80% by mass or less;
> (5) a maximum particle size is larger than 100 μm;
> (6-1) a contact angle on a clean glass surface placed horizontally at a measurement temperature of 20°C is 40° or more and 160° or less;
> (6-2) a sliding angle on a clean glass surface at a measurement temperature of 20°C is 50° or more; and
> (6-3) an advancing contact angle on a clean glass surface at a measurement temperature of 20°C and a tilt angle of 45° is 50° or more.

[2] The paste containing fine food particles according to [1], wherein, when the ultrasonication is carried out, a specific surface area per unit volume after the treatment is 0.08 m$^2$/mL or more, and the specific surface area per unit volume after the treatment increases by 1.1 times or more compared with that before the treatment.

[3] The paste containing fine food particles according to [1] or [2], wherein, when the ultrasonication is carried out, the paste satisfies a formula: $\alpha \times 2.6 + \beta \times 0.03 \geq 2.2$ where a specific surface area per unit volume (m$^2$/mL) is $\alpha$ and a contact angle (°) on a clean glass surface at a measurement temperature of 20°C is $\beta$.

[4] The paste containing fine food particles according to any one of [1] to [3], wherein, when the ultrasonication is carried out, the maximum particle size after the treatment decreases in the range of 10% or more and 95% or less compared with that before the treatment.

[5] The paste containing fine food particles according to any one of [1] to [4], wherein a modal diameter before the ultrasonication is 20 μm or more and 400 μm or less.

[6] The paste containing fine food particles according to any one of [1] to [5], comprising an edible part as the food.

[7] The paste containing fine food particles according to any one of [1] to [6], wherein a 50% integrated diameter (median diameter) in the case where the ultrasonication is carried out is 0.3 μm or more and 150 μm or less.

[8] The paste containing fine food particles according to any one of [1] to [7], wherein a viscosity measured with a Bostwick viscometer at a measurement temperature of 20°C for a measuring time of 10 seconds is 0.1 cm or more and 22.0 cm or less.

[9] The paste containing fine food particles according to any one of [1] to [8], wherein a ratio of the water content to the total oil/fat content is from 1:4 to 4:1.

[10] The paste containing fine food particles according to any one of [1] to [9], comprising both an edible part and an inedible part originating from the same type of food.

[11] The paste containing fine food particles according to any one of [1] to [10], obtained by subjecting one or more foods selected from the group consisting of a seed, a grain, a legume, an alga, a vegetable and a fruit to a pulverizing processing in the presence of the oil/fat.

[12] The paste containing fine food particles according to [11], wherein the food subjected to the pulverizing processing is a dried food.

[13] The paste containing fine food particles according to [12], wherein the food subjected to the pulverizing processing is a food having a water activity value of 0.95 or less.

[14] The paste containing fine food particles according to any one of [11] to [13], wherein the pulverizing processing is a medium stirring mill processing and/or a homogenizer processing.

[15] The paste containing fine food particles according to any one of [11] to [14], wherein the pulverizing processing is a wet pulverizing processing.

[16] A food and drink product comprising the paste containing fine food particles according to any one of [1] to [15].

[17] A liquid seasoning comprising the paste containing fine food particles according to any one of [1] to [15].

[18] A method for suppressing oil release during storage of a paste containing fine food particles, the method comprising subjecting, to a size reduction processing, a food-containing mixed liquid containing 10% by mass or more and 70% by mass or less of one or more foods selected from the group consisting of a seed, a grain, a legume, an alga, a vegetable and a fruit, 10% by mass or more and 70% by mass or less of an oil/fat, and 15% by mass or more and 70% by mass or less of water such that a modal diameter in the case where ultrasonication is carried out is 0.3 μm or more and 200 μm or less; a maximum particle size before the ultrasonication is larger than 100 μm; a contact angle on a clean glass surface placed horizontally at a measurement temperature of 20°C is 40° or more and 160° or less; a sliding angle at a measurement temperature of 20°C is 50° or more; and an advancing contact angle at a measurement temperature of 20°C and a tilt angle of 45° is 50° or more.

3

[19] A method for producing a paste containing fine food particles, the method comprising subjecting, to a size reduction processing, a food-containing mixed liquid containing 10% by mass or more and 70% by mass or less of one or more foods selected from the group consisting of a seed, a grain, a legume, an alga, a vegetable and a fruit, 10% by mass or more and 70% by mass or less of an oil/fat, and 15% by mass or more and 70% by mass or less of water such that a modal diameter in the case where ultrasonication is carried out is 0.3 $\mu$m or more and 200 $\mu$m or less; a maximum particle size before the ultrasonication is larger than 100 $\mu$m; a contact angle on a clean glass surface placed horizontally at a measurement temperature of 20°C is 40° or more and 160° or less; a sliding angle at a measurement temperature of 20°C is 50° or more; and an advancing contact angle at a measurement temperature of 20°C and a tilt angle of 45° is 50° or more.

[20] The method according to [18] or [19], wherein the food subjected to the pulverizing processing is a dried food.

[21] The method according to [20], wherein the food subjected to the pulverizing processing is a food having a water activity value of 0.95 or less.

[22] The method according to any one of [18] to [21], wherein the pulverizing processing is a medium stirring mill processing and/or a homogenizer processing.

[23] The method according to any one of [18] to [22], wherein the pulverizing processing is a wet pulverizing processing.

[24] A paste containing fine food particles obtained through a method comprising subjecting, to a size reduction processing, a food-containing mixed liquid containing 10% by mass or more and 70% by mass or less of one or more foods selected from the group consisting of a seed, a grain, a legume, an alga, a vegetable and a fruit, 10% by mass or more and 70% by mass or less of an oil/fat, and 15% by mass or more and 70% by mass or less of water such that a modal diameter in the case where ultrasonication is carried out is 0.3 $\mu$m or more and 200 $\mu$m or less; a maximum particle size before the ultrasonication is larger than 100 $\mu$m; a contact angle on a clean glass surface placed horizontally at a measurement temperature of 20°C is 40° or more and 160° or less; a sliding angle at a measurement temperature of 20°C is 50° or more; and an advancing contact angle at a measurement temperature of 20°C and a tilt angle of 45° is 50° or more.

Advantageous Effects of Invention

According to the present invention, the composition containing diverse foods provides the paste with a variety of utilization properties, having shape retainability and excellent adhesion property.

Description of Embodiments

Hereinafter, examples of embodiments of the present invention will be described, but the present invention is not limited to these aspects and can be implemented with an arbitrary modification as long as it does not depart from the spirit of the present invention.

The paste containing fine food particles of the present invention is a paste containing fine food particles, comprising fine food particles of one or more selected from the group consisting of a seed, a grain, a legume, an alga, a vegetable and a fruit, and an oil/fat, wherein the paste satisfies all of (1) to (5) and satisfies one or more of (6-1) to (6-3):

(1) a content of fine food particles is 15% by mass or more and 85% by mass or less;
(2) a total oil/fat proportion is 20% by mass or more and 75% by mass or less;
(3) when ultrasonication is carried out, a modal diameter after the treatment is 0.3 $\mu$m or more and 200 $\mu$m or less;
(4) a water content is 20% by mass or more and 80% by mass or less;
(5) a maximum particle size is larger than 100 $\mu$m;
(6-1) a contact angle on a clean glass surface placed horizontally at a measurement temperature of 20°C is 40° or more and 160° or less;
(6-2) a sliding angle on a clean glass surface at a measurement temperature of 20°C is 50° or more; and
(6-3) an advancing contact angle on a clean glass surface at a measurement temperature of 20°C and a tilt angle of 45° is 50° or more.

Recently, researches on the size reduction technology have been actively conducted because it alters physical properties of the material and remarkably expands the application range. In the food field as well, researches on the size reduction technology have been actively conducted, but there has been a problem that the size reduction enhances adhesion property, thereby deteriorating the washability of tableware and production facilities. In addition, when wettability is suppressed in order to improve washability, adhesion property (easiness of adhering to foods or the like) is also lost along with that, and mountability onto foods or the like tends to be deteriorated. That is, conventionally, there has been no composition having both high adhesion property and high washability. Furthermore, there has been a problem that, when the balance among the total oil/fat content, the water content, and the content of fine food particles in the composition is inappropriate, the composition loses shape retainability and loses a value as a thixotropic paste.

That is, according to the present invention, a thixotropic paste having appropriate wettability, adhesion property and shape retainability while having characteristics of a composition containing fine food particles can be provided.

The food, which is the raw material of fine food particles used in the present invention, may be anything as long as it is a food that can be generally consumable, and is one or more selected from the group consisting of a seed, a grain, a legume, a vegetable (including a tuber), a fruit and an alga. Their processed products (including those subjected to a pretreatment such as heat cooking, removal of harshness, peeling, removal of seed, ripening, salting and pericarp processing) are also encompassed.

Any seeds may be employed as long as they are consumable, such as almond, cashew nut, peccan (pecan), macadamia nut, pistachio, hazelnut, coconut, pine nut, sunflower seed, pumpkin seed, watermelon seed, chinquapin, walnut, chestnut, ginkgo, sesame, Brazil nut and the like. Furthermore, cashew nut, macadamia nut and almond can be preferably used.

Any grains may be employed as long as they are consumable, such as corn (in particular, sweet corn is preferable), rice, wheat, barley, sorghum, oat, triticale, rye, buckwheat, fonio, quinoa, Japanese barnyard millet, foxtail millet, proso millet, giant corn, sugar cane, amaranthus and the like. Furthermore, corn (in particular, sweet corn) and rice can be preferably used.

Any legumes may be employed as long as they are consumable, such as common bean (such as red kidney bean and white pea bean), kidney bean, black bean, mottled kidney bean, tiger bean, lima bean, scarlet runner bean, field pea (in particular, green pea), pigeon pea, mung bean, cowpea, adzuki bean, broad bean, soybean (in particular, green soybean), chickpea, Lens culinaris, Lens esculenta, lentil, peanut, lupine, grass pea, locust bean (carob), petai, Néré, coffee bean, cacao bean, Mexican jumping bean and the like. Furthermore, filed pea, green pea, soybean and green soybean can be preferably used.

Any vegetables can be used as long as they are consumable as food and, in particular, radish, carrot, burdock, rutabaga, beet (preferably beetroot: a variety modified such that the root of beets becomes edible), parsnip, turnip, black salsify, sweet potato, cassava, yacon, taro, aroid, konjac yam, tashiroimo (Polynesian arrowroot), lotus root, potato, purple sweet potato, Jerusalem artichoke, kuwai, shallot, garlic, rakkyou, lily bulb, adder's-tongue, kale, yam, yamanoimo, nagaimo, onion, asparagus, udo, cabbage, lettuce, spinach, Chinese cabbage, rape, komatsuna, bok choy, leek, spring onion, nozawana, butterbur, fudansou (swiss chard), potherb mustard, tomato, eggplant, pumpkin, bell pepper, cucumber, Japanese ginger, cauliflower, broccoli, edible chrysanthemum, bitter melon, okra, artichoke, zucchini, sugar beet, ginger, perilla, wasabi, paprika, herbs (watercress, coriander, water spinach, celery, tarragon, chives, chervil, sage, thyme, laurel, parsley, mustard green (leaf mustard), Japanese ginger, mugwort, basil, oregano, rosemary, peppermint, savory, lemongrass, dill, wasabi leaf, leaf of Japanese pepper, and stevia), bracken, Asian royal fern, kudzu, tea plant (tea), bamboo shoot, shiitake, matsutake, Jew's ear, hen of the woods, polypore, oyster mushroom, king trumpet mushroom, enokitake, shimeji, honey mushroom, common mushroom, butterscotch mushroom, Jersey cow mushroom, hatsutake, chichitake and the like can be preferably used. Furthermore, carrot, pumpkin, tomato, paprika, cabbage, beetroot (beet, table beet), onion, broccoli, asparagus, purple sweet potato, sweet potato, tiger nut, mustard, spinach and kale are particularly suitable.

Any fruits may be employed as long as they are consumable and, in particular, Chinese quince, Chinese white pear, pear, quince, medlar, juneberry, shipova, apple, American cherry (black cherry, dark cherry), apricot, plum, cherry (sweet cherry), sour cherry, blackthorn, Japanese plum, peach, gingko, chestnut, chocolate vine, fig, persimmon, black currant, raspberry, kiwifruit (kiwi), oleaster, mulberry, cranberry, cowberry, pomegranate, hardy kiwi, sea buckthorn (saji, hippophae, seaberry), gooseberry, jujube, Japanese bush cherry, honeysuckle, bilberry, red currant, grape, blackberry, blueberry, pawpaw, matsubusa, raspberry, Nanking cherry, mandarin orange, kumquat, trifoliate orange, olive, loquat, wax myrtle, monk fruit, tropical fruits (such as mango, mangosteen, papaya, cherimoya, atemoya, banana, durian, star fruit, guava, pineapple, acerola, passion fruit, dragon fruit, litchi, and canistel), strawberry, watermelon, melon, avocado, miracle fruit, orange, lemon, prune, yuzu citron, sudachi citron, grapefruit, bitter orange, shiikwaasa and the like can be preferably used. Furthermore, avocado, citron, grape, peach, banana, orange, mandarin orange, fig and apple are particularly suitable, and avocado, citron, peach and apple are most suitable.

Any algae may be employed as long as they are consumable, such as large algae, e.g., kelp, wakame, nori, green laver, and gelidiaceae, and microalgae such as green algae, red algae, blue-green algae, dinoflagellate, and euglena. In particular, sea lettuce, green laver, anaaosa, sea grape (kubirezuta), katashiogusa, kubirezuta, kuromiru, tamamiru, Japanese sea lily, hitoegusa, hiraaonori, fusaiwazuta, gutweed, akamoku, amijigusa, sea oak, antokume, ishige, ichimegasa, iroro, iwahige, umi toranoo, umi uchiwa, oobamoku, Okinawa mozuku, kaigaraamanori, kagomenori, kajime (sea oak), kayamonori, gibasa (akamoku, ginnbasou, jinbasou, jibasa), sanadagusa, shiwanokawa, shiwayahazu, European hanover, tsuruarame, nanori (kayamonori), nebarimo, nokogirimoku, habanori, hijiki, hirome, fukuronori, futomozuku, hondawara, makonbu, hornwort, mugiwaranori (kayamonori), muchimo, mozuku, yuna, wakame, asakusanori, ibotsunomata, ushikenori, usukawakaninote, ezotsunomata (kurohaginansou), oobusa, ogonori, okitsunori, obakusa, katanori, kabanori, kamogashiranori, kijinoo, kurohaginansou (ezotsunomata), sakuranori, shiramo, tanbanori, tsunomata, tsurushiramo, tsurutsuru, tosakanori, tosakamatsu, nogenori (fukurofunori), nori (susabinori), hanafunori, harigane, hiragaragara, hirakusa, hiramukade, pirihiba, fukurofunori, fushitsunagi, makusa, marubaamanori, mitsutesozo, euglena, chlorella, mirin, mukadenori, yuikiri, yukari, agar and the like can be used. Among them, kelp, nori, green algae, and the like are particularly preferable.

Among the foods described above, for microalgae such as chlorella, which has a very strong cell wall, it is hard to carry out size reduction, and therefore, it is convenient to use foods other than microalgae.

Among the foods described above, it is preferable to use seeds, grains, legumes, vegetables, fruits and algae. Furthermore, for grains, seeds, legumes, vegetables and fruits, a composition containing a food which has been subjected to size reduction processing obtained by using them as the food has a property of being likely to remain in facilities or the like, and therefore, the technology of improving washability according to the present invention can be preferably used.

One of these foods may be used singly, or two or more of them may be used in combination.

The present invention can be applied to the part of a "food" (for example, "green soybean") normally consumable, that is, an edible part (in the case of "green soybean," the part of beans taken out from the "pod"), but it can also be applied to the part normally not consumable, that is, an inedible part (in the case of "green soybean," this corresponds to the "pod"). Specifically, as an inedible part, one or more selected from the group consisting of parts with a particularly large amount of insoluble dietary fibers, such as a peel, a seed, a core and strained lees of the food mentioned above or a processed product thereof can be used. In addition, in the present invention, it is preferable to include an edible part as a food, it is further preferable to include both an edible part and an inedible part, and it is most preferable to include both an edible part and an inedible part originating from the same type of food because nutrition of the food can be taken up without waste. Examples of the case of using the same type of food include, for example, the case where an edible part of a corn (the part of "seeds") and an inedible part (the part of "cob") are used in combination, and the case where an edible part of a green soybean (the part of "beans") and an inedible part (the part of the "pod") are used in combination. Moreover, even among inedible parts, those containing 5% or more of insoluble dietary fibers have a notably poor ingestibility in particular, and therefore, the technology of the present invention is more useful. It is more useful for those containing 8% or more, more useful for those containing 10% or more, and most useful for those containing 12% or more. Furthermore, even among inedible parts, those having the ratio of insoluble dietary fibers/soluble dietary fibers of 10 times or more have a notably poor ingestibility, and therefore, the technology of the present invention is more useful. It is further useful for those having the ratio of 13 times or more, and most useful for those having the ratio of 15 times or more (for example, the cob of a sweet corn, which belongs to corns, contains 15.1% of insoluble dietary fibers and the ratio of insoluble dietary fibers/soluble dietary fibers is 21.6 times).

The "inedible part" in the present invention represents a part that is wasted in normal dietary habit, and the "edible part" represents a part obtained by getting rid of the part to be wasted from the entire food (more specifically, the purchased form). In addition, those having ordinary skill in the art who handle foods or processed products thereof can of course understand the site and quantity of the "inedible part" of the foods or processed products thereof, but this can be understood more clearly by referring to and applying, for example, judgment standards of the "waste ratio" and "part to be wasted" in STANDARD TABLES OF FOOD COMPOSITION IN JAPAN - 2015 - (Seventh Revised Version). For example, the site and quantity of the inedible part can be identified and understood as "part to be wasted: pod (waste ratio: 45%)" in the case of "vegetable/green soybean/raw" or as "part to be wasted: core (waste ratio: 15%)" in the case of "(cabbage)/cabbage/head-forming leaf, raw" (and eventually, the edible part can also be understood).

Among parts of the food described above, normally not consumable, the part with a particularly large amount of insoluble dietary fibers, such as an outer skin, a seed, a core and strained lees of the food mentioned above, has a particularly poor ingestibility and has not been used for eating conventionally. Therefore, the technology of the present invention can be used to it more preferably.

In particular, for parts normally not consumable (such as a peel, a seed, a core and strained lees) of rice, apple, green soybean, corn (in particular, sweet corn), onion, cabbage, carrot, paprika, beet, broccoli, pumpkin, field pea (green pea), tomato, citrus fruits (in particular, Citrus unshiu and citron), sugarcane, grape and the like, there is a situation where parts in which abundant nutritions remain are wasted, and therefore, the present invention can be used for this most preferably. Furthermore, the present invention can be preferably used for, for example, hull of (unhulled) rice; bract, pistil and corncob of corn; skin (bract), bottom part and head of onion; core of cabbage; plant foot of spinach; petiole base of kale; pericarp and seed of grape; pod of green soybean; pod of field pea; rind of pumpkin; stem of broccoli; skin of beet; skin of purple sweet potato; seed and calyx of paprika; strained lees of sugarcane; and skin of carrot.

From the viewpoint of stability of the oil/fat in the composition (oil releasability), formability of the thixotropic paste, and the like, it is preferable to use a dried food as the food described above. With respect to the quality of the dried food, 0.95 or less of the water activity of the food is preferable because shape retainability is likely to be exhibited and the application range is expanded to various food and drink products, and 0.9 or less is more preferable, 0.8 or less is more preferable, and 0.65 or less is further preferable. Note that the water activity value of the food material can be measured in accordance with a conventional method using a general water activity measuring apparatus.

Moreover, when a dried food is used as the food, a method in which a food that has been subjected to a drying treatment in advance is used is further preferable. The drying method of the food may be any method generally used for drying foods, and mention may be made of, for example, drying methods through sun drying, drying in shade, freeze-drying, air-drying (hot air drying, fluid bed drying, spray-drying, drum drying, low temperature (ordinary temperature) drying and the like), press drying, reduced-pressure drying, microwave drying, hot oil drying and the like. It is further preferable to use methods through air-drying or freeze-drying because the degree of change in color or flavor that the food originally has is small and smells other than the food (scorched flavor and the like) are unlikely to occur. Furthermore, it is most preferable to carry out low temperature (ordinary temperature) drying.

It is further preferable to carry out the size reduction processing in the presence of an oil/fat and water at a proportion defined in the present invention, using a food that has been subjected to a drying treatment in advance.

The paste of the present invention is a paste containing fine food particles that have been subjected to a pulverizing processing, that is, a paste containing fine particles obtained by subjecting a food to a pulverizing processing. As mentioned above, in the paste of the present invention, since it contains fine particles, properties as a thixotropic paste can be obtained.

Moreover, in the present invention, unless otherwise indicated, the "ultrasonication" represents a treatment through an ultrasonic wave with a frequency of 40 kHz and at an output of 40 W for 3 minutes.

The content of fine food particles in the paste of the present invention is only required to be 15% by mass or more and 85% by mass or less from the viewpoint of washability, stability (oil releasability), easiness of ingestion and the like. When it is less than 15% by mass, the washability is not improved, and therefore, the content of fine food particles is preferably 15% by mass or more and most preferably 20% by mass or more. In addition, when the content of fine food particles exceeds 85% by mass, the quality of the paste becomes unsuited for ingestion, and such content is thus not preferable. Therefore, the content of fine food particles is preferably 85% by mass or less, preferably 80% by mass or less, preferably 75% by mass or less, further preferably 70% by mass or less, further preferably 60% by mass or less, further preferably 50% by mass or less, and most preferably 40% by mass or less.

For the content of the fine food particles in the paste of the present invention, the content of fine food particles in the paste is measured, excluding foods and the like larger than 2,000 $\mu$m (2 mm), which is out of the target for measurement with a laser diffraction type particle size distribution measuring apparatus or a particle shape image analyzer in the present invention.

When the paste contains foods and the like larger than 2 mm, the content of fine food particles can be defined as, for example, the weight of a precipitated fraction obtained by passing the paste through 9 mesh (2 mm opening) to remove foods and the like larger than 2 mm in the paste, then subjecting the resultant fraction to centrifugation, and sufficiently removing the separated supernatant. A part of the oil/fat and water is incorporated in the precipitated fraction, and therefore, the total amount of fine food particles represents the total weight of those components incorporated in the precipitated fraction and the fine food particles. In addition, when the paste as it is does not pass through 9 mesh, for example, the paste is diluted with a solvent such as water or an oil and then the resultant is uniformly mixed at a strength such that the size of fine food particles is not affected. The diluted solution is then passed through 9 mesh, the resultant fraction is subjected to centrifugation, and the separated supernatant is sufficiently removed to obtain a precipitated fraction, whose weight may be measured. Moreover, for the residue on the mesh upon passing the paste through 9 mesh, after leaving it at rest sufficiently, fine food particles smaller than the opening of 9 mesh are allowed to sufficiently pass the mesh with a spatula or the like without altering the particle size of the composition, and then, the flow through fraction may be obtained.

Conditions of centrifugation may not be limited as long as fine food particles precipitate to a degree where the separated supernatant can be removed. The content of fine food particles in the paste can be measured by, for example, carrying out centrifugation at 15,000 rpm for 1 minute to the flow through fraction, sufficiently removing the separated supernatant, and measuring the weight of the precipitated fraction.

The paste of the present invention contains an oil/fat. For the type of the oil/fat, mention may be made of edible oils and fats, various fatty acids, foods obtained by using them as a raw material, and the like, but it is preferable to use an edible oil/fat. In addition, when the paste of the present invention has a total oil/fat content within a particular range, its wettability is appropriately suppressed, and therefore, the total oil/fat content of the entire paste is 20% by mass or more and 75% by mass or less. It is further preferable that the total oil/fat content of the entire paste be 30% by mass or more, and it is further preferably 40% by mass or more and most preferably 50% by mass or more. When the total oil/fat content of the entire paste is less than 20% by mass, the wettability becomes too high and this is not preferable. Moreover, the total oil/fat content is further preferably 70% by mass or less and most preferably 65% by mass or less.

Examples of the edible oil/fat includes sesame oil, rapeseed oil, high oleic acid rapeseed oil, soybean oil, palm oil, palm stearin, palm olein, palm kernel oil, palm mid fraction (PMF), cottonseed oil, corn oil, sunflower oil, high oleic acid sunflower oil, safflower oil, olive oil, linseed oil, rice oil, camellia oil, perilla oil, flavor oil, coconut oil, grape seed oil, peanut oil, almond oil, avocado oil, salad oil, canola oil, fish oil, beef tallow, lard, chicken fat, or MCT (medium-chain triglyceride), diglyceride, hydrogenated oil, interesterified fat, milk fat, ghee, cacao butter, and the like, but it is preferable to use oils and fats other than cacao butter because it is easy to feel flavors thereof. In addition, liquid edible oils and fats such as sesame oil, olive oil, rapeseed oil, soybean oil, milk fat, sunflower oil, rice oil and palm olein are more preferable because they have effects of enhancing the smoothness of a paste and can be used more effectively. In addition, the edible oil/fat may be an oil/fat included in the food of the paste, but it is preferable that an oil/fat that has been subjected to an extraction and purification treatment be added separately from the food because the compatibility between the oil/fat and the food is better. It is preferable to add an oil/fat that has been subjected to an extraction and purification treatment at 10% by mass or more of the entire oil/fat, and it is more preferable to add an oil/fat that has been subjected to an extraction and purification treatment at 30% by mass or more.

Moreover, it is preferable that the edible oil/fat be an edible oil/fat in which the proportion of an unsaturated fatty acid (the total proportion of a monounsaturated fatty acid and a polyunsaturated fatty acid) is higher than the proportion of a saturated fatty acid in the composition thereof because the size reduction processing can be carried out efficiently, and it is further preferable that the proportion of an unsaturated fatty acid be higher than the doubled amount of the proportion of a saturated fatty acid as the entire oil/fat.

Furthermore, examples of foods obtained by using an edible oil/fat as a raw material include butter, margarine, shortening, fresh cream, soy milk cream (for example, "Ko-cream" (R) from FUJI OIL CO., LTD.), and the like, but especially, foods having physical properties of liquid can be conveniently used. Among these, two or more edible oils and fats, or foods obtained by using them as a raw material may be used in combination at an arbitrary ratio.

When the water content of the entire composition is adjusted along with the total oil/fat content, the wettability of the paste of the present invention is appropriately suppressed, and therefore, the water content of the entire paste is greater than 20% by mass and 80% by mass or less. When the water content of the entire paste is 20% by mass or less, the wettability becomes too high and this is not preferable. Water may be added as liquid water, or may be included in the composition as water originating from raw materials. In addition, it is more preferable that the water content of the entire paste be 30% by mass or more, and it is further preferably 40% by mass or more and most preferably 45% by mass or more. Moreover, the water content of the entire paste is more preferably 70% by mass or less and most preferably 60% or less. Furthermore, when the ratio of the water content to the total oil/fat content is from 1:4 to 4:1, the wettability is further suppressed and this is preferable. The ratio is further preferably 1:3 to 3:1 and most preferably 1:2 to 2:1.

In the paste of the present invention, if the size reduction is carried out until the maximum particle size before the ultrasonication becomes 100 $\mu$m or less, the structure of the food is destroyed to give an unfavorable flavor. Therefore, it is preferable to carry out the size reduction such that the maximum particle size before the ultrasonication is larger than 100 $\mu$m. For measurement of the maximum particle size, the measurement can be carried out by using a laser diffraction type particle size distribution measuring apparatus.

The paste of the present invention is a muddied system and it is hard to visually determine the maximum particle size, but it is believed that there is high probability for a paste containing particles whose maximum particle size before the ultrasonication is larger than 100 $\mu$m to contain particles whose maximum particle size observed with the naked eyes under microscope is larger than 100 $\mu$m.

In the present invention, when the paste has a property that the maximum particle size after the ultrasonication decreases by 10% or more compared with that before the treatment, the paste has a quality that the stability (oil releasability) is retained for a long period (for example, 1 month or more at ordinary temperature), and this is preferable. It is further preferable to decrease by 20% or more, further preferable to decrease by 30% or more, further preferable to decrease by 40% or more, and most preferable to decrease by 45% or more. In addition, from the viewpoint of preventing the texture from being powdery, the decreasing rate of the maximum particle size via the ultrasonication is preferably 95% or less and further preferably 90% or less. The "percentage by which the maximum particle size after the ultrasonication decreases compared with that before the treatment (the decreasing rate of the maximum particle size)" represents a value obtained by subtracting from 100% the proportion expressing "the maximum particle size after the ultrasonication with a frequency of 40 kHz and an output of 40 W for 3 minutes/the maximum particle size before the ultrasonication" in %. For example, when the maximum particle size before the ultrasonication in a paste is 200 $\mu$m and the maximum particle size after the ultrasonication is 150 $\mu$m, the percentage by which the maximum particle size of the paste after the ultrasonication decreases compared with that before the treatment (the decreasing rate of the maximum particle size) is 25%.

Furthermore, the maximum particle size in the present invention can be measured by using a laser diffraction type particle size distribution measuring apparatus, which will be mentioned later, and by using a particle size for each measurement channel described in Table 1 as the standard, under the same condition as the modal diameter or the like. That is, the % particle frequency for each channel can be determined by measuring, for each channel, the frequency of particles whose particle size is not more than the particle size defined for each channel and larger than the particle size defined for the next channel (for the largest channel within the measuring range, a particle size at the measuring lower limit), and by using the total frequency of all channels within the measuring range as a denominator. Specifically, with respect to the results obtained by measuring the % particle frequency for each of 132 channels in Table 1 described below, among channels in which the % particle frequency was confirmed, the particle size of a channel for which the maximum particle size is defined was employed as the maximum particle size. That is, a preferable measuring method in measuring the composition containing fine food particles of the present invention using a laser diffraction type particle size distribution measuring apparatus is as follows: "with a laser diffraction type particle size distribution measuring apparatus, quickly after introducing a sample, the particle size is measured by using 95% ethanol as a measuring solvent and targeting the measuring upper limit of 2,000.00 $\mu$m and the measuring lower limit of 0.021 $\mu$m. For a sample to which ultrasonication is carried out, ultrasonication with a frequency of 40 kHz and an output of 40 W for 3 minutes is carried out."

The paste of the present invention exerts satisfactory properties when not only the maximum particle size before the ultrasonication, but also the specific surface area before and after the ultrasonication, the modal diameter, the d50 and the like are within a particular range.

Moreover, the specific surface area per unit volume in the present invention represents a specific surface area per unit volume in the case where the particle is assumed to be spherical, and it is obtained by measuring a sample with a laser diffraction type particle size distribution measuring apparatus. For the specific surface area per unit volume in the case where the particle is assumed to be spherical, from the viewpoint of obtaining a satisfactory flavor, the specific surface area per unit volume in the case where the ultrasonication is carried out is preferably 1.00 m$^2$/mL or less, more preferably 0.85 m$^2$/mL or less, more preferably 0.75 m$^2$/mL or less, more preferably 0.60 m$^2$/mL or less, and most preferably 0.45 m$^2$/mL or less. In addition, from the viewpoint of ensuring a satisfactory ingestibility, the specific surface area per unit volume in the case where the ultrasonication is carried out is preferably 0.08 m$^2$/mL or more, more preferably 0.09 m$^2$/mL or more, and more preferably 0.14 m$^2$/mL or more. Furthermore, it is preferable that the ultrasonication increase the specific surface area per unit volume by 1.1 times or more, and more preferably 2.0 times or more.

The modal diameter before the ultrasonication is preferably 20 $\mu$m or more, more preferably 30 $\mu$m or more, further preferably 40 $\mu$m or more, and most preferably 50 $\mu$m or more. In addition, it is preferably 400 $\mu$m or less.

Moreover, the modal diameter in the case where the ultrasonication is carried out is preferably 0.3 $\mu$m or more, more preferably 6 $\mu$m or more, and further preferably 15 $\mu$m or more. Furthermore, the modal diameter in the case where the ultrasonication is carried out is preferably 200 $\mu$m or less, more preferably 150 $\mu$m or less, further preferably 100 $\mu$m or less, and particularly preferably 90 $\mu$m or less.

In particular, by adjusting the modal diameter in the case where the ultrasonication is carried out within a certain range, the stability (oil releasability) specific to the composition of the present invention is further enhanced, and this is preferable. In addition, it is preferable that the ultrasonication change the modal diameter to 1% or more and 95% or less, and more preferably to 5% or more and 93% or less. By adjusting the rate of change in the modal diameter around the ultrasonication within a certain range, the stability (oil releasability) is enhanced for a long period (for example, 1 month or more at ordinary temperature), and this is preferable. For example, when the modal diameter of the composition before the ultrasonication is 100 $\mu$m and the modal diameter of the composition in the case where the ultrasonication is carried out is 20 $\mu$m, the rate of change in the modal diameter around the ultrasonication is 20%.

The d50 (median diameter) before the ultrasonication is preferably 20 $\mu$m or more, more preferably 25 $\mu$m or more, and further preferably 30 $\mu$m or more. In addition, the d50 before the ultrasonication is preferably 400 $\mu$m or less, and more preferably 500 $\mu$m or less. The d50 in the case where the ultrasonication is carried out is preferably 0.3 $\mu$m or more, preferably 1 $\mu$m or more, more preferably 5 $\mu$m or more, more preferably 8 $\mu$m or more, more preferably 10 $\mu$m or more, and further preferably 15 $\mu$m or more. Moreover, the d50 in the case where the ultrasonication is carried out is preferably 150 $\mu$m or less, and more preferably 100 $\mu$m or less.

The particle size in the present invention all represents a particle size measured based on volume, unless otherwise indicated.

Moreover, the specific surface area in the present invention (a specific surface area per unit volume in the case where the particle is assumed to be spherical) is obtained by measuring a sample with a laser diffraction type particle size distribution measuring apparatus. Note that the specific surface area per unit volume in the case where the particle is assumed to be spherical is a numerical value based on a measurement mechanism different from a measured value reflecting the component or surface structure of the particle, which is unmeasurable with a laser diffraction type particle size distribution measuring apparatus (the specific surface area per volume or per weight determined by permeability method or gas adsorption method). Furthermore, the specific surface area per unit volume in the case where the particle is assumed to be spherical is determined by "6 x $\sum$ (ai)/$\sum$ (ai·di)," where the surface area per particle is ai and the particle size is di.

The modal diameter represents, with respect to the particle size distribution for each channel obtained by measuring the composition with a laser diffraction type particle size distribution measuring apparatus, the particle size of a channel whose % particle frequency is the highest. When multiple channels having exactly the same % particle frequency are present, the particle size of a channel whose particle size is the smallest among them is employed. If the particle size distribution is a normal distribution, its value coincides with the median diameter, but when the particle size distribution has a deviation, especially when the particle size distribution has multiple peaks, their numerical values vary greatly. Particle size distribution measurement of the sample with a laser diffraction type particle size distribution measuring apparatus can be implemented according to, for example, the following method.

For the laser diffraction type particle size distribution measuring apparatus, for example, Microtrac MT3300 EX II system from MicrotracBEL Corp. can be used. With respect to a solvent for the measurement, those unlikely to affect the structure of fine food particles in the paste can be used. For example, it is preferable to use 95% ethanol (for example, a particular alcohol commercially available from Japan Alcohol Corporation, Traceable 95 First Grade with an alcohol content of 95) for a composition with a lot of oil. As a measurement application software, DMS2 (Data Management System version 2, from MicrotracBEL Corp.) can be used. In the measurement, the cleaning button of the measurement application software is pressed down to implement cleaning, the Setzoro button of the software is then pressed down to implement zero adjustment, and a sample can be directly introduced until entering a proper concentration range with sample loading. For a sample not to be subjected to the ultrasonication, the concentration is adjusted to a proper range in two times of sample loading after introducing the sample, and immediately after the adjustment, laser diffraction is carried out at a flow rate of 60% and for a measuring time of 10 seconds, and the obtained result is used as a measured value. For a sample to be subjected to the ultrasonication, by pressing down the ultrasonication button of the software, the ultrasonication is carried out with a frequency of 40 kHz and an output of 40 W for 3 minutes. After a degassing treatment is carried out two times, the sample loading is carried out again after the ultrasonication. After it is confirmed that the concentration is in a proper range, laser diffraction is promptly carried out at a flow rate of 60% and for a measuring time of 10 seconds, and the obtained result can be used as a measured value.

For measurement conditions, the measurement can be carried out under conditions of distribution display: volume, refractive index of particle: 1.60, refractive index of solvent: 1.36, measuring upper limit ($\mu$m) = 2,000.00 $\mu$m, and measuring lower limit ($\mu$m) = 0.021 $\mu$m.

In the present invention, when the particle size distribution for each channel (CH) is measured, it can be measured by using a particle size for each measurement channel described in Table 1, which will be mentioned later, as the standard. The particle size defined for each channel is also referred to as "the particle size of channel XX." The % particle frequency for each channel (which is also referred to as "the % particle frequency of channel XX") can be determined by measuring, for each channel, the frequency of particles whose particle size is not more than the particle size defined for each channel and larger than the particle size defined for the next channel (for the largest channel within the measuring range, a particle size at the measuring lower limit), and by using the total frequency of all channels within the measuring range as a denominator. For example, the % particle frequency of channel 1 represents the % frequency of particles with a particle size of 2,000.00 $\mu$m or less and larger than 1826.00 $\mu$m.

The paste of the present invention is a thixotropic paste, and it is preferable that the wettability be suppressed to a degree where the contact angle is within a certain range. Specifically, it is preferable that the contact angle on a clean glass surface placed horizontally at a measurement temperature of 20°C be 40° or more and 160° or less. When the paste according to the present invention is dropped on the surface of a clean glass (for example, a brand-new slide glass "S-1225" from Matsunami Glass Ind., Ltd.) placed horizontally, the paste becomes rounded due to its own "surface tension." The contact angle represents an angle (°) formed between the surface of the composition and the glass surface (the angle inside the composition is employed) at a location where the free surface of the paste standing still (normally, the paste stops moving approximately 10 seconds after the dropping) contacts with the glass surface.

The contact angle in the present invention can be determined via the following calculation. That is, about 0.1 mL of the paste is gently dropped from the height of about 3 cm such that the contact surface with the glass surface becomes generally circular. In the generally circular contact surface of the paste standing still 10 seconds after the dropping on the glass surface, the length of the inscribed, longest straight line is defined as 2r (mm) and the distance (height) between the highest part of the dropped paste and the glass surface is defined as H (mm). The contact angle $\theta$ (°) is expressed according to the following equation.

$$\tan(\theta/2) = H/r$$

Liquids like water or oils become a shield-shaped droplet on the glass surface, and the contact angle is less than 40° (the actual measurement value of distilled water is 2°). Solids like butter or lard do not form a generally circular contact surface on the glass surface, or even if it is formed, the contact angle has a value greater than 160°, and therefore, they are different from the paste of the present invention.

When the contact angle of the paste according to the present invention is less than 40°, the paste gives an unfavorable quality because adhesion effects are weakened. Therefore, the contact angle is preferably 40° or more, further preferably 50° or more, further preferably 60° or more, further preferably 70° or more, further preferably 80° or more, and most preferably 90° or more. In addition, it is preferable that the contact angle of the paste according to the present invention be 160° or less because this is convenient for producing the composition.

In the paste of the present invention, it is preferable that the wettability be suppressed to a degree where the sliding angle is within a certain range. Specifically, it is preferable that the sliding angle on a clean glass surface at a measurement temperature of 20°C be 50° or more. About 0.1 mL of the composition is gently dropped from the height of about 3 cm such that the contact surface with the glass surface becomes generally circular. Ten seconds after the dropping, the composition stops moving, and then, the glass surface is slowly inclined by raising one side thereof. The sliding angle represents an angle at which the droplet starts sliding down (that is, the position and shape of the contact surface between the composition and the glass surface start changing).

For liquids like water or oils, the droplet on the glass surface starts sliding down even if the inclination is little, and therefore, the sliding angle is less than 50° (the actual measurement value of distilled water is 5°). In addition, for compositions having a generally large contact angle, the affinity to a solid surface is low, and thus, they fail to stay on the solid surface. Consequently, the sliding angle is small and they have a quality that it is difficult for them to be mounted on a food or the like. According to the technology of the present invention, it is even possible to provide a paste in which the contact angle and the sliding angle are both within a certain range, which has contradictory properties (thixotropic properties such as appropriate wettability, adhesion property and shape retainability) which have hitherto been difficult to achieve, and which consequently has novel and advantageous properties.

When the sliding angle of the paste according to the present invention is less than 50°, the shape retainability is reduced, and this is not preferable.
The sliding angle is preferably 50° or more, further preferably 60° or more, further preferably 70° or more, and most preferably 85° or more.

In the paste of the present invention, it is preferable that the wettability be suppressed to a degree where the advancing contact angle is within a certain range. Specifically, it is preferable that the advancing contact angle on a clean glass surface at a measurement temperature of 20°C and a tilt angle of 45° be 50° or more. About 0.1 mL of the paste is gently dropped from the height of about 3 cm such that the contact surface with the glass surface becomes generally circular. Ten seconds after the dropping, the paste stops moving, and then, the glass surface is inclined at an angle of 45°. The advancing contact angle represents an angle (°) formed between the surface of the paste and the glass surface (the angle inside the paste is employed) at a location where the free surface of the paste contacts with the glass surface. When a paste strongly has solid-like properties, its advancing contact angle on a clean glass surface at a measurement temperature of 20°C and a tilt angle of 45° is less than 50°, and the deformability, which is prerequisite for shape retainability, is not sufficient and this is not preferable. The advancing contact angle is preferably 50° or more, further preferably 60° or more, further preferably 70° or more, and most preferably 90° or more. Meanwhile, when a paste strongly has liquid-like properties, its advancing contact angle is greater than 165°, and the shape retainability is not sufficient and this is not preferable. The advancing contact angle is preferably 165° or less.

As mentioned above, in the paste of the present invention, preferable effects according to the present invention are exhibited when any one or more of the requisites are satisfied: whether the wettability is suppressed to a degree where the advancing contact angle is within a certain range; whether the wettability is suppressed to a degree where the sliding angle is within a certain range; and whether the wettability is suppressed to a degree where the advancing contact angle is within a certain range. It is more preferable that two or more of them be satisfied and it is most preferable that all three requisites be satisfied.

In the paste of the present invention, when the ultrasonication is carried out, if a relational expression "$\alpha \times 2.6 + \beta \times 0.03$" is 2.2 or more (where the specific surface area per unit volume ($m^2$/mL) after the treatment is $\alpha$ and the contact angle (°) on a clean glass surface at a measurement temperature of 20°C is $\beta$), that is, if the paste satisfies the following relational expression, the flowability is appropriately suppressed and tendency to drip is improved when used for food and drink products, which is preferable:

$$\alpha \times 2.6 + \beta \times 0.03 \geq 2.2$$

It is further preferable that the relational expression "$\alpha \times 2.6 + \beta \times 0.03$" be 2.4 or more, and it is further preferable that the relational expression be 3.0 or more.

It is better to adjust to 20 Pa·s or less the viscosity (20°C) of a food-containing medium before the size reduction processing in which the food is contained in an oil/fat or water, and when it is adjusted to 8 Pa·s, the efficiency of size reduction processing is further enhanced, which is useful. Moreover, it is preferable that the viscosity (20°C) of the composition containing fine food particles be adjusted to 10 mPa·s or more, and it is more preferable that the viscosity be adjusted to 50 mPa·s or more.

The paste of the present invention is preferably a thixotropic paste. The "thixotropic paste" in the present invention represents a pasty composition that is a viscoelastic body with both solid and liquid properties. It has a certain shape retainability and also has a texture that readily breaks when a stress is applied, exhibiting behaviors like a weak gel. For example, a typical thixotropic paste can be defined through a measured value of viscosity (cm) with a Bostwick viscometer (measurement temperature: 20°C, 10 seconds). For example, a thixotropic paste having slightly strong solid-like physical properties has a measured value of viscosity with a Bostwick viscometer (measurement temperature: 20°C, 10 seconds) of less than 0.1 cm, and therefore, the measured value of viscosity is preferably 0.1 cm or more and more preferably 1 cm or more. Meanwhile, a thixotropic paste having slightly strong liquid-like physical properties has a measured value of viscosity (measurement temperature: 20°C, 10 seconds) of greater than 22 cm, and therefore, when the measured value of viscosity is 22 cm or less, tendency to drip is improved when used for food and drink products, which is preferable. It is more preferably 20 cm or less, more preferably 17 cm or less, and further preferably 15 cm or less.

The paste according to the present invention has appropriate wettability, adhesion property and shape retainability. The principle by which such thixotropic properties are exhibited is not clear, but it is believed that when fine food particles with a particular size are dispersed in the presence of an oil/fat and water at a particular proportion, a gel network structure is formed and behaviors like a weak gel are exhibited.

The measured value of viscosity according to the present invention can be measured by using a Bostwick viscometer. Specifically, the measurement can be carried out by using a KO type Bostwick viscometer (from FUKAYATEKKOUSYO, the one with the length of a trough of 28.0 cm and a Bostwick viscosity, that is, the maximum distance of a sample flowing down in the trough of 28.0 cm). In the measurement, the measured value of viscosity with a Bostwick viscometer can be measured by installing the apparatus horizontally using a spirit level, closing the gate, then filling a sample whose temperature has been adjusted to 20°C to the full level of the reservoir, pushing down the trigger to open the gate and simultaneously starting time measurement, and measuring the distance of the material flowing down in the trough after 10 seconds has passed.

The paste of the present invention may contain various foods, food additives or the like that are used for general foods, as necessary, in the range satisfying constituent elements of the present invention. For example, mention may be made of soy sauce, miso (fermented soybean paste), alcohols, saccharides (such as glucose, sucrose, fructose, glucose-fructose syrup and fructose-glucose syrup), sugar alcohols (such as xylitol, erythritol and maltitol), artificial sweeteners (such as sucralose, aspartame, saccharin and acesulfame K), minerals (such as calcium, potassium, sodium, iron, zinc and magnesium, as well as salts thereof), flavoring agents, pH modifiers (such as sodium hydroxide, potassium hydroxide, lactic acid, citric acid, tartaric acid, malic acid and acetic acid), cyclodextrin, antioxidants (such as vitamin E, vitamin C, tea extract, raw coffee bean extract, chlorogenic acid, spice extract, caffeic acid, rosemary extract, vitamin C palmitate, ruitn, quercetin, myrica extract and sesame extract), and the like. In addition, emulsifying agents (such as glycerine fatty acid ester, acetic acid monoglyceride, lactic acid monoglyceride, citric acid monoglyceride, diacetyltartaric acid monoglyceride, succinic acid monoglyceride, polyglycerin fatty acid ester, polyglycerin condensed ricinoleic acid ester, Quillaja extract, soybean saponin, tea seed saponin and sucrose fatty acid ester), coloring agents and thickening stabilizers can also be added, but due to a recent rise of nature-oriented trend, the quality is desirable in which a so-called emulsifying agent and/or a coloring agent and/or a thickening stabilizer (for example, those listed as a "coloring agent", "thickening stabilizer" and "emulsifying agent" in "Name List of Food Additive Substances for Designation" of Pocketbook of Food Additive Designation (version H23)) are not added, and in particular, when an emulsifying agent is not added, the quality in which the taste of the material is likely to be felt is obtained, which is preferable. Furthermore, the most desirable is the quality not containing food additives (for example, substances listed in "Name List of Food Additive Substances for Designation" of Pocketbook of Food Additive Designation (version H23) that are used for the food additive purpose). Moreover, it is preferable not to add refined saccharides (such as glucose, sucrose, fructose, glucose-fructose syrup and fructose-glucose syrup) other than the material because they tend to prevent sweetness of the material itself from being felt, and it is preferable to use sweetness originating from a fruit juice or a concentrate thereof (such as apple juice, grape juice and date palm juice).

The paste of the present invention can be produced basically by subjecting the food described above, preferably the dried food described above to a pulverizing processing or a size reduction processing in the presence of a certain water content or a total oil/fat proportion, as necessary.

The pulverizing processing or size reduction means used for the present invention is not particularly limited, and may be any equipment that is referred to as a blender, mixer, milling machine, kneading machine, pulverizing machine, disintegrating machine, grinding machine or the like. It may be any of dry pulverization and wet pulverization, and may be any of high temperature pulverization, ordinary temperature pulverization and low temperature pulverization. For example, as a dry fine pulverizing machine, medium stirring mills such as dry bead mills and ball mills (including tumbling type and vibration type), jet mills, high speed rotation impact type mills (including pin mills), roller mills, hammer mills and the like can be used. For example, for wet fine pulverization, medium stirring mills such as bead mills and ball mills (including tumbling type, vibration type and planetary type mills), roller mills, colloid mills, Star Burst, homogenizers (in particular, high-pressure homogenizers) and the like can be used. For a paste containing fine food particles having a particular shape in a state of having been subjected to a wet fine pulverizing processing, medium stirring mills (ball mills and bead mills) and homogenizers (in particular, high-pressure homogenizers) can be used more preferably. For example, homogenizers (in particular, high-pressure homogenizers) and medium stirring mills can be used preferably. When the treatment is carried out by using a medium stirring mill, it is preferable that the Bostwick viscosity of the contents before the treatment (measurement temperature: 20°C) be 28.0 cm or less in 10 seconds because it is easy to carry out the treatment.

In particular, when a pulverizing method using a wet bead mill or a homogenizer (in particular, a high-pressure homogenizer) is employed, compared with other treatment methods, separation of the oil/fat upon leaving the paste at rest is not likely to occur and a quality with a high stability is achieved, which is preferable. The principle behind this is not clear, but it is believed that the bead mill processing or the homogenizer (in particular, a high-pressure homogenizer) preferably alters the particle state of fine food particles.

With respect to conditions in the treatment with a wet bead mill, the size and filling rate of beads, the mesh size of the outlet, the liquid transferring speed of the raw material slurry, the rotational strength of the mill, whether the treatment is carried out with a scheme in which the sample is allowed to pass only once (one-pass) or with a scheme in which the sample is allowed to circulate many times (circulating type), and the like may be selected and adjusted appropriately depending on the size or nature of the food, and the targeted nature of the paste containing fine food particles, but a one-pass treatment is preferable, and the treatment time is further preferably 1 minute or more and 25 minutes or less, and most preferably 2 minutes or more and 20 minutes or less. Moreover, it is better to subject to the size reduction processing a food that has been roughly pulverized in advance with a jet mill, pin mill, stone mill pulverizing mill or the like as a pretreatment beforehand, and although the principle is not clear, when a food powder with the size adjusted to a median diameter of 1,000 $\mu$m or less and 100 $\mu$m or more is subjected to the size reduction processing, wettability of a target is further suppressed, which is more preferable. Furthermore, in the bead mill processing, the material of beads and the material of the internal cylinder of the bead mill are preferably the same material, and it is further preferable that both materials be zirconia.

For the homogenizer, anything can be used as long as it has capacities of size-reducing and uniformizing particles and can achieve a certain level of emulsification and dispersion, but for example, Homo Mixer MARK II (from PRIMIX Corporation) can be used. Furthermore, for the high-pressure homogenizer, anything can be used as long as it is a dispersing machine that can carry out a shearing treatment under a condition in which the pressure is raised to 1.00 MPa or more, but for example, the Panda 2K homogenizer (from Niro Soavi), Cavitoron (from Eurotec, Ltd.), LAB2000 (from SMT CO., LTD.) or the like can be used. With respect to the treatment conditions, for example, it is preferable that the size reduction processing be carried out in a state where the pressure is raised and adjusted to 0.01 MPa or more, and further preferably to 0.02 MPa or more. The size reduction processing can be carried out by implementing a high pressure homogenization treatment for a single time or for multiple times in a state where the pressure is raised and adjusted to 50 MPa or more. In carrying out the size reduction processing described above, it is preferable to subject the food to the size reduction processing in a pulverization solvent. Note that, when the pressurized condition is too harsh, there is a risk that the facility is damaged, and therefore, when the treatment is carried out by using a high-pressure homogenizer, the upper limit of the pressurized condition during the size reduction processing is preferably 200 MPa or less.

That is, the present invention includes the following inventions (A) and (B):

(A) A method for producing a paste containing fine food particles, the method comprising subjecting, to a size reduction processing, a food-containing mixed liquid containing 10% by mass or more and 70% by mass or less of one or more foods selected from the group consisting of a seed, a grain, a legume, an alga, a vegetable and a fruit, 10% by mass or more and 70% by mass or less of an oil/fat, and 15% by mass or more and 70% by mass or less of water such that a modal diameter in the case where ultrasonication is carried out is 0.3 $\mu$m or more and 200 $\mu$m or less; a maximum particle size before the ultrasonication is larger than 100 $\mu$m; a contact angle on a clean glass surface placed horizontally at a measurement temperature of 20°C is 40° or more and 160° or less; a sliding angle at a measurement temperature of 20°C is 50° or more; and an advancing contact angle at a measurement temperature of 20°C and a tilt angle of 45° is 50° or more.

(B) A paste containing fine food particles obtained through a method comprising subjecting, to a size reduction processing, a food-containing mixed liquid containing 10% by mass or more and 70% by mass or less of one or more foods selected from the group consisting of a seed, a grain, a legume, an alga, a vegetable and a fruit, 10% by mass or more and 70% by mass or less of an oil/fat, and 15% by mass or more and 70% by mass or less of water such that a modal diameter in the case where ultrasonication is carried out is 0.3 $\mu$m or more and 200 $\mu$m or less; a maximum particle size before the ultrasonication is larger than 100 $\mu$m; a contact angle on a clean glass surface placed horizontally at a measurement temperature of 20°C is 40° or more and 160° or less; a sliding angle at a measurement temperature of 20°C is 50° or more; and an advancing contact angle at a measurement temperature of 20°C and a tilt angle of 45° is 50° or more.

The paste of the present invention described hereinabove can be, not only eaten as it is by mounting it on a food such as confectionery, but also preferably used as a raw material or a material of a food and drink product or a liquid seasoning. That is, the present invention encompasses a food and drink product and a liquid seasoning containing the paste of the present invention. By using the paste of the present invention as a part of raw materials, seasonings having a high shape retainability such as sauce, dipping sauce, dip, mayonnaise, dressing, butter and jam can be produced. Desirably, the amount to be added to the seasoning is approximately around 0.001 to 50% by mass. In addition, in the production, the paste may be added to the seasoning at any time. Specifically, the paste of the present invention may be added to the seasoning, or a food or the like before the size reduction processing may be added to the seasoning and the size reduction processing may then be implemented under predetermined conditions, or these methods may be combined, but the method in which the paste of the present invention is added to the seasoning is industrially convenient and preferable.

Moreover, the present invention includes the following inventions as derived aspects focusing on effects of suppressing wettability, improving shape retainability and improving adhesion property through the size reduction processing in the method for producing the composition of the present invention. Note that, with respect to inventions (i) to (vii), it is only required for one or more of (6-1) to (6-3) to be satisfied, but it is more preferable that 2 or more of them be satisfied and it is most preferable that all three be satisfied.

(i) A paste containing fine food particles, comprising fine food particles of one or more selected from the group consisting of a seed, a grain, a legume, an alga, a vegetable and a fruit, and an oil/fat, wherein the paste satisfies all of (1) to (5) described below and satisfies one or more of (6-1) to (6-3):

(1) a content of fine food particles is 15% by mass or more and 85% by mass or less;
(2) a total oil/fat proportion is 20% by mass or more and 75% by mass or less;
(3) when ultrasonication is carried out, a modal diameter after the treatment is 0.3 $\mu$m or more and 200 $\mu$m or less;
(4) a water content is 20% by mass or more and 80% by mass or less;
(5) a maximum particle size is larger than 100 $\mu$m;
(6-1) a contact angle on a clean glass surface placed horizontally at a measurement temperature of 20°C is 40° or more and 160° or less;
(6-2) a sliding angle on a clean glass surface at a measurement temperature of 20°C is 50° or more; and
(6-3) an advancing contact angle on a clean glass surface at a measurement temperature of 20°C and a tilt angle of 45° is 50° or more.

(ii) A paste containing fine food particles in a state where one or more dried foods selected from the group consisting of a dried seed, a dried grain, a dried legume, a dried vegetable and a dried fruit are subjected to a size reduction processing in the presence of an oil/fat, wherein the paste satisfies all of (1) to (5) described below and satisfies one or more of (6-1) to (6-3):

(1) a content of fine food particles is 15% by mass or more and 85% by mass or less;
(2) a total oil/fat proportion is 20% by mass or more and 75% by mass or less;
(3) a modal diameter in the case where ultrasonication is carried out is 0.3 $\mu$m or more and 200 $\mu$m or less;
(4) a water content is 20% by mass or more and 80% by mass or less;
(5) a maximum particle size before ultrasonication is larger than 100 $\mu$m;
(6-1) a contact angle on a clean glass surface placed horizontally at a measurement temperature of 20°C is 40° or more and 160° or less;
(6-2) a sliding angle on a clean glass surface at a measurement temperature of 20°C is 50° or more; and
(6-3) an advancing contact angle on a clean glass surface at a measurement temperature of 20°C and a tilt angle of 45° is 50° or more.

(iii) A paste containing fine food particles, comprising fine food particles of one or more selected from the group consisting of an edible part and an inedible part of a seed, a grain, a legume, an alga, a vegetable and a fruit, and an oil/fat, wherein the paste satisfies all of (1) to (5) described below and satisfies one or more of (6-1) to (6-3):

(1) a content of fine food particles is 15% by mass or more and 85% by mass or less;
(2) a total oil/fat proportion is 20% by mass or more and 75% by mass or less;
(3) when ultrasonication is carried out, a modal diameter after the treatment is 0.3 $\mu$m or more and 200 $\mu$m or less;
(4) a water content is 20% by mass or more and 80% by mass or less;
(5) a maximum particle size is larger than 100 $\mu$m;
(6-1) a contact angle on a clean glass surface placed horizontally at a measurement temperature of 20°C is 40° or more and 160° or less;
(6-2) a sliding angle on a clean glass surface at a measurement temperature of 20°C is 50° or more; and
(6-3) an advancing contact angle on a clean glass surface at a measurement temperature of 20°C and a tilt angle of 45° is 50° or more.

(iv) A method for improving adhesion property of a paste containing fine food particulate complexes, comprising subjecting to a pulverizing processing one or more dried foods selected from the group consisting of a dried seed, a dried grain, a dried legume, a dried vegetable and a dried fruit to produce a paste containing fine food particles that satisfies all of (1) to (5) described below and satisfies one or more of (6-1) to (6-3):

(1) a content of fine food particles is 15% by mass or more and 85% by mass or less;
(2) a total oil/fat proportion is 20% by mass or more and 75% by mass or less;
(3) when ultrasonication is carried out, a modal diameter after the treatment is 0.3 $\mu$m or more and 200 $\mu$m or less;
(4) a water content is 20% by mass or more and 80% by mass or less;
(5) a maximum particle size is larger than 100 $\mu$m;
(6-1) a contact angle on a clean glass surface placed horizontally at a measurement temperature of 20°C is 40° or more and 160° or less;
(6-2) a sliding angle on a clean glass surface at a measurement temperature of 20°C is 50° or more; and
(6-3) an advancing contact angle on a clean glass surface at a measurement temperature of 20°C and a tilt angle of 45° is 50° or more.

(v) A method for improving wettability of a paste containing fine food particulate complexes, comprising subjecting to a pulverizing processing one or more dried foods selected from the group consisting of a dried seed, a dried grain, a dried legume, a dried vegetable and a dried fruit to produce a paste containing fine food particles that satisfies all of (1) to (5) described below and satisfies one or more of (6-1) to (6-3):

(1) a content of fine food particles is 15% by mass or more and 85% by mass or less;
(2) a total oil/fat proportion is 20% by mass or more and 75% by mass or less;
(3) when ultrasonication is carried out, a modal diameter after the treatment is 0.3 $\mu$m or more and 200 $\mu$m or less;
(4) a water content is 20% by mass or more and 80% by mass or less;
(5) a maximum particle size is larger than 100 $\mu$m;
(6-1) a contact angle on a clean glass surface placed horizontally at a measurement temperature of 20°C is 40° or more and 160° or less;
(6-2) a sliding angle on a clean glass surface at a measurement temperature of 20°C is 50° or more; and
(6-3) an advancing contact angle on a clean glass surface at a measurement temperature of 20°C and a tilt angle of 45° is 50° or more.

(vi) A method for improving shape retainability of a paste containing fine food particulate complexes, comprising subjecting to a pulverizing processing one or more dried foods selected from the group consisting of a dried seed, a dried grain, a dried legume, a dried vegetable and a dried fruit to produce a paste containing fine food particles that satisfies all of (1) to (5) described below and satisfies one or more of (6-1) to (6-3) :

(1) a content of fine food particles is 15% by mass or more and 85% by mass or less;
(2) a total oil/fat proportion is 20% by mass or more and 75% by mass or less;
(3) when ultrasonication is carried out, a modal diameter after the treatment is 0.3 $\mu$m or more and 200 $\mu$m or less;
(4) a water content is 20% by mass or more and 80% by mass or less;
(5) a maximum particle size is larger than 100 $\mu$m;
(6-1) a contact angle on a clean glass surface placed horizontally at a measurement temperature of 20°C is 40° or more and 160° or less;
(6-2) a sliding angle on a clean glass surface at a measurement temperature of 20°C is 50° or more; and
(6-3) an advancing contact angle on a clean glass surface at a measurement temperature of 20°C and a tilt angle of 45° is 50° or more.

(vii) A method for suppressing oil release during storage of a paste containing fine food particles, the method comprising subjecting, to a size reduction processing, a food-containing mixed liquid containing 10% by mass or more and 70% by mass or less of one or more foods selected from the group consisting of a dried seed, a dried grain, a dried legume, a dried vegetable and a dried fruit, 10% by mass or more and 70% by mass or less of an oil/fat, and 15% by mass or more and 70% by mass or less of water such that a modal diameter in the case where ultrasonication is carried out is 0.3 $\mu$m or more and 200 $\mu$m or less; a maximum particle size before the ultrasonication is larger than 100 $\mu$m; a contact angle on a clean glass surface placed horizontally at a measurement temperature of 20°C is 40° or more and 160° or less; a sliding angle at a measurement temperature of 20°C is 50° or more; and an advancing contact angle at a measurement temperature of 20°C and a tilt angle of 45° is 50° or more.

Examples

Hereinafter, the present invention will be described in further detail in accordance with Examples, but these Examples are merely examples conveniently illustrated for description, and the present invention is in no sense limited to these Examples. Note that, when there is no particular limitation on a food in Examples, the part of that food normally consumable was used.

[Method for Preparing Sample of Paste Containing Fine food particles]

Paste containing fine food particles were prepared as follows.

Each of sweet corn and milled rice, which belong to grains; the edible part of carrot, pumpkin, potato, mustard and table beet, which belong to vegetables, obtained by removing skin, calyx or the like; the edible part of apple and peach, which belong to fruits, obtained by removing skin, core or the like; the edible part of cashew nut, which belongs to seeds, obtained by removing shell or the like; and the edible part of kelp, which belongs to algae, obtained by removing root or the like was subjected to a drying treatment and then pulverized according to the method described in "Method for size-reducing raw material(s)" in Tables to obtain a dried pulverized product. Furthermore, dried beans of soybean, which belongs to legumes, obtained by taking them out from the pod, and a dried product of green soybean (soybean in an immature state harvested with a pod, and the bean exhibits a green appearance) obtained by boiling, taking out from the pod and drying it were pulverized according to the method described in "Method for size-reducing raw material(s)" in Tables to obtain dried pulverized products. In addition, with respect to sweet corn, which belongs to grains, the inedible part "cob" was dried and pulverized according to the method described in "Method for size-reducing raw material(s)" in Tables to obtain a dried pulverized product. Furthermore, with respect to green soybean, which belongs to legumes, the inedible part "pod" was dried and pulverized according to the method described in "Method for size-reducing raw material(s)" in Tables to obtain a dried pulverized product. Moreover, with respect to onion, which belongs to vegetables, the edible part was pulverized as it is to obtain a pulverized product (raw). Furthermore, with respect to sweet potato, which belongs to vegetables, the edible part obtained by removing skin or the like was pulverized according to the method described in "Method for size-reducing raw material(s)", 10% by weight of koji (malted rice) was added to the resultant paste, and the resultant mixture was left at rest at 50°C for 5 days to obtain a pulverized product (raw).

Compositions obtained by mixing these pulverized products appropriately according to "Blend composition" in Tables were subjected to a size reduction processing (first) according to the method described in "Method of size reduction processing (first)" in Tables until they appeared generally uniform to obtain pasty compositions. As an oil/fat, a commercially available olive oil (14% of saturated fatty acids, 80% of unsaturated fatty acids), a salad oil (8% of saturated fatty acids, 85% of unsaturated fatty acids) and a palm oil (50% of saturated fatty acids and 45% of unsaturated fatty acids) were used. In addition, for a kelp soup stock, vinegar and the like, commercial products were used.

Moreover, with respect to samples obtained by additionally subjecting the compositions described above to a size reduction processing, that treatment was appropriately implemented according to the method described in "Method of size reduction processing (second)" in Tables. The paste containing a food which has been subjected to size reduction processing was obtained, in the case of using a "bead mill," by using a wet bead mill fine pulverizing machine and beads of φ2 mm to perform the size reduction processing, by using Homo Mixer MARK II (from PRIMIX Corporation) as a homogenizer to perform an emulsification treatment, or by using LAB2000 (from SMT CO., LTD.) as a high-pressure homogenizer and implementing a high pressure homogenization treatment for a single time in a state where the pressure was raised and adjusted to 80 MPa or more to perform the size reduction processing.

In the present invention, when the particle size distribution for each channel is measured, it was measured by using a particle size for each measurement channel described in Table 1 as the standard. The % particle frequency for each channel was determined by measuring, for each channel, the frequency of particles whose particle size is not more than the particle size defined for each channel and larger than the particle size defined for the next channel (for the largest channel within the measuring range, a particle size at the measuring lower limit), and by using the total frequency of all channels within the measuring range as a denominator. Specifically, the % particle frequency for each of 132 channels below was measured. With respect to the results obtained by the measurement, the particle size of a channel whose % particle frequency is the highest was defined as the modal diameter.

When multiple channels having exactly the same % particle frequency are present, the particle size of a channel whose particle size is the smallest among them was employed as the modal diameter. In addition, among channels in which the % particle frequency was confirmed, the particle size of a channel for which the maximum particle size is defined was employed as the maximum particle size.

[Table 1]

| Channel | Particle size (μm) | Channel | Particle size (μm) | Channel | Particle size (μm) | Channel | Particle size (μm) |
|---|---|---|---|---|---|---|---|
| 1 | 2000.000 | 37 | 88.000 | 73 | 3.889 | 109 | 0.172 |
| 2 | 1826.000 | 38 | 80.700 | 74 | 3.566 | 110 | 0.158 |
| 3 | 1674.000 | 39 | 74.000 | 75 | 3.270 | 111 | 0.145 |
| 4 | 1535.000 | 40 | 67.860 | 76 | 2.999 | 112 | 0.133 |
| 5 | 1408.000 | 41 | 62.230 | 77 | 2.750 | 113 | 0.122 |
| 6 | 1291.000 | 42 | 57.060 | 78 | 2.522 | 114 | 0.111 |
| 7 | 1184.000 | 43 | 52.330 | 79 | 2.312 | 115 | 0.102 |
| 8 | 1086.000 | 44 | 47.980 | 80 | 2.121 | 116 | 0.094 |
| 9 | 995.600 | 45 | 44.000 | 81 | 1.945 | 117 | 0.086 |
| 10 | 913.000 | 46 | 40.350 | 82 | 1.783 | 118 | 0.079 |
| 11 | 837.200 | 47 | 37.000 | 83 | 1.635 | 119 | 0.072 |
| 12 | 767.700 | 48 | 33.930 | 84 | 1.499 | 120 | 0.066 |
| 13 | 704.000 | 49 | 31.110 | 85 | 1.375 | 121 | 0.061 |
| 14 | 645.600 | 50 | 28.530 | 86 | 1.261 | 122 | 0.056 |
| 15 | 592.000 | 51 | 26.160 | 87 | 1.156 | 123 | 0.051 |
| 16 | 542.900 | 52 | 23.990 | 88 | 1.060 | 124 | 0.047 |
| 17 | 497.800 | 53 | 22.000 | 89 | 0.972 | 125 | 0.043 |
| 18 | 456.500 | 54 | 20.170 | 90 | 0.892 | 126 | 0.039 |
| 19 | 418.600 | 55 | 18.500 | 91 | 0.818 | 127 | 0.036 |
| 20 | 383.900 | 56 | 16.960 | 92 | 0.750 | 128 | 0.033 |
| 21 | 352.000 | 57 | 15.560 | 93 | 0.688 | 129 | 0.030 |
| 22 | 322.800 | 58 | 14.270 | 94 | 0.630 | 130 | 0.028 |
| 23 | 296.000 | 59 | 13.080 | 95 | 0.578 | 131 | 0.026 |
| 24 | 271.400 | 60 | 12.000 | 96 | 0.530 | 132 | 0.023 |
| 25 | 248.900 | 61 | 11.000 | 97 | 0.486 | | |
| 26 | 228.200 | 62 | 10.090 | 98 | 0.446 | | |
| 27 | 209.300 | 63 | 9.250 | 99 | 0.409 | | |
| 28 | 191.900 | 64 | 8.482 | 100 | 0.375 | | |
| 29 | 176.000 | 65 | 7.778 | 101 | 0.344 | | |
| 30 | 161.400 | 66 | 7.133 | 102 | 0.315 | | |
| 31 | 148.000 | 67 | 6.541 | 103 | 0.289 | | |
| 32 | 135.700 | 68 | 5.998 | 104 | 0.265 | | |
| 33 | 124.500 | 69 | 5.500 | 105 | 0.243 | | |
| 34 | 114.100 | 70 | 5.044 | 106 | 0.223 | | |
| 35 | 104.700 | 71 | 4.625 | 107 | 0.204 | | |
| 36 | 95.960 | 72 | 4.241 | 108 | 0.187 | | |
| (1) θ (Contact Angle) (20°C), (2) Sliding Angle (20°C) and (3) Advancing Contact Angle (Tilt Angle: 45°, 20°C) | | | | | | | |

The contact angle in the present invention was measured according to the following method. That is, about 0.1 mL of the paste was gently dropped from the height of about 3 cm such that the contact surface with the glass surface became generally circular. In the generally circular contact surface of the paste standing still 10 seconds after the dropping on the glass surface, the length of the inscribed, longest straight line was defined as 2r (mm) and the distance (height) between the highest part of the dropped composition and the glass surface was defined as H (mm). The contact angle θ (°) was determined through the equation: $\tan(\theta/2) = H/r$.

For the sliding angle of the paste according to the present invention, about 0.1 mL of the paste was gently dropped from the height of about 3 cm such that the contact surface with the glass surface became generally circular. Ten seconds after the dropping, the paste stopped moving, and then, the glass surface was slowly inclined by raising one side thereof. An angle was measured at which the droplet started sliding down (that is, the position and shape of the contact surface between the paste and the glass surface started changing).

For the advancing contact angle of the paste according to the present invention, about 0.1 mL of the paste was gently dropped from the height of about 3 cm such that the contact surface with the glass surface became generally circular. Ten seconds after the dropping, the paste stopped moving, and then, the glass surface was inclined at an angle of 45°. An angle (°) formed between the surface of the paste and the glass surface (the angle inside the paste is employed) at a location where the free surface of the paste contacted with the glass surface was measured.

(4) Measured Value of Viscosity Using Bostwick Viscometer (20°C, 10 Seconds)

The measured value of viscosity of the paste according to the present invention was measured by using a KO type Bostwick viscometer (from FUKAYATEKKOUSYO). Upon the measurement, the measured value of viscosity with a Bostwick viscometer was measured by installing the apparatus horizontally using a spirit level, closing the gate, then filling a sample whose temperature has been adjusted to 20°C to the full level of the reservoir, pushing down the trigger to open the gate and simultaneously starting time measurement, and measuring the distance of the material flowing down in the trough after 10 seconds has passed.

(5) Washability, (6) Adhesion property, (7) Shape Retainability and (8) Stability (Oil Releasability)

For the sample of each paste obtained in Examples and Comparative Examples, one tablespoon of the sample mounted on a cracker ("Levain (R)" from YAMAZAKI BISCUITS CO., LTD.) was subjected to observation and tasting, and an organoleptic test for evaluating the quality regarding the adhesion property to foods and the shape retainability was carried out by the total number of 10 trained organoleptic inspectors.

Note that, for the organoleptic inspectors described above, identification trainings of the following A) to C) were implemented to select inspectors who achieve particularly excellent grades, who have experience in product development and a plenty of knowledge about the quality of foods such as taste and texture, and who can make absolute evaluation on each organoleptic inspection item.

A) identification test for taste qualities, in which, for each of five tastes (sweetness: taste of sugar, sour taste: taste of tartaric acid, umami: taste of sodium glutamate, saltiness: taste of sodium chloride, and bitterness: taste of caffeine), an aqueous solution having a concentration close to the threshold of each component is prepared, and among the total of seven samples using the above and two samples of distilled water, a sample with each taste is exactly identified.

B) identification test for concentration difference, in which concentration difference among five common salt aqueous solutions and acetic acid aqueous solutions having slightly different concentrations is exactly identified.

C) three-point identification test, in which, among the total of three samples: two soy sauces manufactured by Company A and one soy sauce manufactured by Company B, the soy sauce of Company B is exactly identified.

For all of the evaluation items described above, evaluation of a standard sample was carried out by all inspectors in advance to perform standardization for each score of evaluation criteria, and then, an organoleptic inspection with objectivity was carried out by the total number of 10 inspectors. In the evaluation for each evaluation item, evaluation was carried out with a scheme in which each inspector selected one numeral closest to his/her own evaluation among five ratings for each item. Totalization of the evaluation results was carried out by calculating the arithmetic mean value of scores of the total number of 10 inspectors and further calculating the standard deviation in order to evaluate dispersion among inspectors.

For the sample of each paste, stability (oil releasability) upon leaving the sample at rest at 40°C for one week was evaluated compared with the quality before the storage.

Besides, for the "washability," about 0.1 mL of the paste was gently dropped from the height of about 3 cm onto a clean glass (for example, a brand-new slide glass "S-1225" from Matsunami Glass Ind., Ltd.) such that the contact surface with the glass surface became generally circular. The paste standing still after the dropping was horizontally immersed in distilled water together with the slide glass, and the slide glass was slowly moved up and down by about 5 cm. Upon this, the remaining condition of the paste on the glass was observed, and its easiness of washing was evaluated by the total number of 10 inspectors. Moreover, the number of vertical strokes required until it became impossible to visually confirm the residue on the glass was counted and defined as the "Number of vertical strokes required for general completion of cleaning." For example, if the sample remained after completion of two strokes and the sample did not remain after completion of three strokes, the number of vertical strokes was determined as three times.

For the sample of each paste, in this organoleptic test, evaluation was carried out for each of four items such as "washability", "adhesion property", "shape retainability" and "stability (oil releasability)" with a full mark of 5. For the "washability," easiness of washing with respect to the composition on the glass surface was evaluated with five grades: 5: washability is satisfactory; 4: washability is slightly satisfactory; 3: neutral; 2: washability is slightly unsatisfactory; and 1: washability is unsatisfactory. For the "adhesion property," regarding the adhesion property upon eating, easiness of adhesion of the composition was evaluated with five grades: 5: adhesion property is satisfactory; 4: adhesion property is slightly satisfactory; 3: neutral; 2: adhesion property is slightly poor; and 1: adhesion property is poor. For the "shape retainability," shape retainability of the composition was evaluated with five grades: 5: shape retainability is satisfactory; 4: shape retainability is slightly satisfactory; 3: neutral; 2: shape retainability is slightly poor; and 1: shape retainability is poor. For the "stability (oil releasability)," the oil releasability upon leaving the sample at rest at 40°C for one week was evaluated with five grades, compared with the quality before the storage: 5: oil release is not recognized, which is preferable; 4: oil release is hardly recognized, which is slightly preferable; 3: oil release can be recognized but within an acceptable range; 2: oil release is slightly noticeable, which is slightly unpreferable; and 1: oil release is noticeable, which is no preferable. For each evaluation item, evaluation was carried out with a scheme in which each inspector selected one numeral closest to his/her own evaluation. In addition, totalization of the evaluation results was carried out by calculating the arithmetic mean value of scores of the total number of 10 inspectors.

In training of organoleptic inspectors, identification trainings for the five senses, for example, identification trainings like the following A) to C) were implemented to select inspectors who achieve particularly excellent grades, who have experience in product development and a plenty of knowledge about the quality of foods such as taste and appearance, and who can make absolute evaluation on each organoleptic inspection item. Moreover, the point on each evaluation axis and the evaluation quality were calibrated (aligned) in advance, in order to prevent evaluations of inspectors from varying, and trainings that enable objective evaluation were performed. Then, an organoleptic inspection with objectivity was carried out by the total number of 10 inspectors.

A) identification test for taste qualities, in which, for each of five tastes (sweetness: taste of sugar, sour taste: taste of tartaric acid, umami: taste of sodium glutamate, saltiness: taste of sodium chloride, and bitterness: taste of caffeine), an aqueous solution having a concentration close to the threshold of each component is prepared, and among the total of seven samples using the above and two samples of distilled water, a sample with each taste is exactly identified;
B) identification test for concentration difference, in which concentration difference among five common salt aqueous solutions and acetic acid aqueous solutions having slightly different concentrations is exactly identified; and
C) three-point identification test, in which, among the total of three samples: two soy sauces manufactured by Company A and one soy sauce manufactured by Company B, the soy sauce of Company B is exactly identified.

The results obtained are shown in Table 2 to Table 6.

[Table 2]

| <Formulation> | | Examples | | | | | |
|---|---|---|---|---|---|---|---|
| | | 1 | 2 | 3 | 4 | 5 | 6 |
| [Edible part] dried carrot | Parts by mass | | | | | | |
| [Edible part] dried pumpkin | Parts by mass | | | | | | |
| [Edible part] dried sweet corn | Parts by mass | 200 | 200 | 200 | 200 | 166.5 | 200 |
| [Edible part] dried soybean | Parts by mass | | | | | | |
| [Edible part] dried green soybean | Parts by mass | | | | | | |
| [Edible part] rice flour | Parts by mass | | | | | | |
| [Edible part] dried table beet | Parts by mass | | | | | | |
| [Edible part] dried kelp | Parts by mass | | | | | | |
| [Edible part] dried apple | Parts by mass | | | | | | |
| [Inedible part] dried sweet corn (cob) | Parts by mass | | | | | 83.5 | |
| [Inedible part] dried green soybean (pod) | Parts by mass | | | | | | |
| [Edible part] onion paste (raw) | Parts by mass | | | | | | |
| [Edible part] dried mustard powder | Parts by mass | | | | | | |
| [Edible part] potato flake | Parts by mass | | | | | | |
| Salad oil | Parts by mass | | | | | | |
| Olive oil | Parts by mass | 720 | 620 | 400 | 400 | 250 | 200 |
| Palm oil | Parts by mass | | | | | | |
| Kelp soup stock | Parts by mass | | | | | | |
| Water | Parts by mass | 80 | 180 | 400 | 400 | 500 | 600 |
| Total | Parts by mass | 1000 | 1000 | 1000 | 1000 | 1000 | 1000 |
| Method for size-reducing raw material(s) | | Jet mill | Jet mill | Jet mill | Jet mill | Pin mill | Jet mill |
| Method of size reduction processing (first) | | Cutter mixer | Cutter mixer | Cutter mixer | High-pressure homogenizer | High-pressure homogenizer | Cutter mixer |
| Method of size reduction processing (second) | | - | - | - | Medium stirring mill | Medium stirring mill | - |

| | | | | | | | | |
|---|---|---|---|---|---|---|---|---|
| Measured value | Content of fine food particles | % by mass | 31.2 | 31.0 | 30.7 | 30.7 | 38.0 | 29.8 |
| | Water content of entire composition | % by mass | 9.3 | 19.8 | 42.1 | 42.1 | 51.7 | 61.8 |
| | Total oil/fat content | % by mass | 77.7 | 66.5 | 42.6 | 42.6 | 26.8 | 21.5 |
| | <Analytical value> | | | | | | | |
| Before ultrasonication | Maximum particle size before ultrasonication | μm | 418.6 | 2000.0 | 995.6 | 1674.0 | 418.6 | 995.6 |
| | d50 before ultrasonication | μm | 66.14 | 326.80 | 81.00 | 66.24 | 30.22 | 96.57 |
| | Modal diameter before ultrasonication | μm | 62.23 | 418.60 | 62.23 | 52.33 | 33.93 | 322.80 |
| | Specific surface area (CS) before ultrasonication | m²/mL | 0.102 | 0.026 | 0.092 | 0.118 | 0.266 | 0.101 |
| After ultrasonication | Maximum particle size after ultrasonication | μm | 148.0 | 296.0 | 124.5 | 104.7 | 104.7 | 104.7 |
| | d50 after ultrasonication | μm | 35.93 | 80.81 | 29.67 | 21.08 | 8.43 | 18.90 |
| | Modal diameter after ultrasonication | μm | 37.00 | 80.70 | 31.11 | 23.99 | 8.48 | 22.00 |
| | Specific surface area (CS) after ultrasonication : $\alpha$ | m²/mL | 0.185 | 0.077 | 0.244 | 0.351 | 0.806 | 0.413 |
| | <Results of organoleptic evaluation> | | | | | | | |
| | Washability | | 4 | 2 | 4 | 4 | 5 | 4 |
| | Adhesion property | | 1 | 4 | 5 | 5 | 5 | 4 |
| | Shape retainability | | 1 | 4 | 5 | 5 | 5 | 4 |
| | Stability (oil releasability) | | 1 | 3 | 5 | 5 | 5 | 5 |
| | Number of vertical strokes required for general completion of cleaning | Times | 6 | 18 | 4 | 4 | 3 | 5 |
| | $\theta$ (contact angle) (20°C) : $\beta$ | ° | 30 | 38 | 127 | 134 | 81 | 53 |
| | Sliding angle (20°C) | ° | 45 | 90 or more | 90 or more | 90 or more | 90 or more | 75 |
| | Advancing contact angle (tilt angle: 45°) (20°C) | ° | - | 60 | 130 | 135 | 120 | 55 |
| | 2.6×$\alpha$+0.03×$\beta$ | | 1.38 | 1.34 | 4.44 | 4.92 | 4.39 | 2.67 |
| | Measured value of viscosity with Bostwick viscometer (measurement temperature: 20°C, 10 seconds) | cm | 26.0 | 25.0 | 3.0 | 2.5 | 5.0 | 19.0 |

[Table 3]

| <Formulation> | | | Examples | | | | | |
|---|---|---|---|---|---|---|---|---|
| | | | 7 | 8 | 9 | 10 | 11 | 12 |
| [Edible part] dried carrot | | Parts by mass | | | | | | |
| [Edible part] dried pumpkin | | Parts by mass | | | | | | |
| [Edible part] dried sweet corn | | Parts by mass | 200 | 620 | 540 | 460 | 380 | 102 |
| [Edible part] dried soybean | | Parts by mass | | | | | | |
| [Edible part] dried green soybean | | Parts by mass | | | | | | |
| [Edible part] rice flour | | Parts by mass | | | | | | |
| [Edible part] dried table beet | | Parts by mass | | | | | | |
| [Edible part] dried kelp | | Parts by mass | | | | | | |
| [Edible part] dried apple | | Parts by mass | | | | | | |
| [Inedible part] dried sweet corn (cob) | | Parts by mass | | | | | | |
| [Inedible part] dried green soybean (pod) | | Parts by mass | | | | | | |
| [Edible part] onion paste (raw) | | Parts by mass | | | | | | |
| [Edible part] dried mustard powder | | Parts by mass | | | | | | |
| [Edible part] potato flake | | Parts by mass | | | | | | |
| Salad oil | | Parts by mass | | | | | | |
| Olive oil | | Parts by mass | 80 | 200 | 180 | 180 | 60 | 450 |
| Palm oil | | Parts by mass | | | | | | |
| Kelp soup stock | | Parts by mass | | | | | | |
| Water | | Parts by mass | 720 | 180 | 280 | 360 | 560 | 448 |
| Total | | Parts by mass | 1000 | 1000 | 1000 | 1000 | 1000 | 1000 |
| Method for size-reducing raw | | | Jet mill | Jet mill | Jet mill | Jet mill | Jet mill | Jet mill |

21

| | | | | | | | | |
|---|---|---|---|---|---|---|---|---|
| | material(s) | | | | | | | |
| | Method of size reduction processing (first) | | | Cutter mixer | Cutter mixer | Cutter mixer | Cutter mixer | Cutter mixer | Cutter mixer |
| | Method of size reduction processing (second) | | | - | - | - | - | - | - |
| Measured value | Content of fine food particles | % by mass | | 29.9 | 92.4 | 80.5 | 68.6 | 56.9 | 15.1 |
| | Water content of entire composition | % by mass | | 73.3 | 20.8 | 30.6 | 38.4 | 57.8 | 46.9 |
| | Total oil/fat content | % by mass | | 9.3 | 24.1 | 21.6 | 21.1 | 8.3 | 47.3 |
| <Analytical value> | | | | | | | | | |
| Before ultrasonication | Maximum particle size before ultrasonication | μm | | 1408.0 | 2000 | 1674 | 2000 | 2000 | 418.6 |
| | d50 before ultrasonication | μm | | 76.83 | 148.80 | 458.70 | 323.70 | 346.70 | 44.15 |
| | Modal diameter before ultrasonication | μm | | 40.35 | 271.40 | 592.00 | 296.00 | 913.00 | 47.98 |
| | Specific surface area (CS) before ultrasonication | m²/mL | | 0.149 | 0.143 | 0.025 | 0.030 | 0.047 | 0.171 |
| After ultrasonication | Maximum particle size after ultrasonication | μm | | 88.0 | 592 | 1184 | 1184 | 248.9 | 104.7 |
| | d50 after ultrasonication | μm | | 13.03 | 30.49 | 183.50 | 102.80 | 29.95 | 16.91 |
| | Modal diameter after ultrasonication | μm | | 15.56 | 22.00 | 248.90 | 88.00 | 37.00 | 18.50 |
| | Specific surface area (CS) after ultrasonication | : α | m²/mL | 0.577 | 0.339 | 0.055 | 0.089 | 0.301 | 0.428 |
| <Results of organoleptic evaluation> | | | | | | | | | |
| | Washability | | | 4 | 2 | 2 | 5 | 5 | 4 |
| | Adhesion property | | | 1 | 4 | 4 | 4 | 1 | 4 |
| | Shape retainability | | | 3 | 5 | 5 | 5 | 2 | 4 |
| | Stability (oil releasability) | | | 3 | 3 | 2 | 4 | 4 | 4 |
| | Number of vertical strokes required for general completion of cleaning | Times | | 6 | 2 | 9 | 2 | 3 | 5 |
| | θ (contact angle) (20°C) | : β | ° | 23 | 144 | 140 | 113 | 127 | 159 |
| | Sliding angle (20°C) | | ° | 40 | 90 or more | 80 | 70 | 37 | 65 |
| | Advancing contact angle (tilt angle: 45°) (20°C) | | ° | - | 95 | 95 | 80 | - | 65 |
| | 2.6×α+0.03×β | | | 2.18 | 5.21 | 4.33 | 3.61 | 4.59 | 5.88 |
| | Measured value of viscosity with Bostwick viscometer (measurement temperature: 20°C, 10 seconds) | cm | | 23.0 | 0.0 | 1.5 | 4.5 | 23.0 | 8.0 |

[Table 4]

| <Formulation> | | | 13 | 14 | 15 | 16 | 17 | 18 |
|---|---|---|---|---|---|---|---|---|
| [Edible part] dried carrot | | Parts by mass | | | 200 | 200 | 200 | 200 |
| [Edible part] dried pumpkin | | Parts by mass | | | | | | |
| [Edible part] dried sweet corn | | Parts by mass | 50 | 200 | | | | |
| [Edible part] dried soybean | | Parts by mass | | | | | | |
| [Edible part] dried green soybean | | Parts by mass | | | | | | |
| [Edible part] rice flour | | Parts by mass | | | | | | |
| [Edible part] dried table beet | | Parts by mass | | | | | | |
| [Edible part] dried kelp | | Parts by mass | | | | | | |

EP 3 556 221 A1

| | | Parts by mass | | | | | | |
|---|---|---|---|---|---|---|---|---|
| [Edible part] dried apple | Parts by mass | | | | | | | |
| [Inedible part] dried sweet corn (cob) | Parts by mass | | | | | | | |
| [Inedible part] dried green soybean (pod) | Parts by mass | | | | | | | |
| [Edible part] onion paste (raw) | Parts by mass | | | | | | | |
| [Edible part] dried mustard powder | Parts by mass | | | | | | | |
| [Edible part] potato flake | Parts by mass | | | | | | | |
| Salad oil | Parts by mass | | | | | | | |
| Olive oil | Parts by mass | 475 | 400 | 720 | 600 | 400 | 400 |
| Palm oil | Parts by mass | | | | | | | |
| Kelp soup stock | Parts by mass | | | | | | | |
| Water | Parts by mass | 475 | 400 | 80 | 200 | 400 | 400 |
| Total | Parts by mass | 1000 | 1000 | 1000 | 1000 | 1000 | 1000 |
| | Method for size-reducing raw material(s) | | Jet mill | Jet mill | Jet mill | Jet mill | Jet mill | Jet mill |
| | Method of size reduction processing (first) | | Cutter mixer | Cutter mixer | Cutter mixer | Cutter mixer | Cutter mixer | High-pressure homogenizer |
| | Method of size reduction processing (second) | | - | - | - | - | - | Medium stirring mill |
| Measured value | Content of fine food particles | % by mass | 7.4 | 29.7 | 29.4 | 29.5 | 29.7 | 29.7 |
| | Water content of entire composition | % by mass | 49.6 | 42.1 | 9.3 | 21.8 | 42.1 | 42.1 |
| | Total oil/fat content | % by mass | 49.7 | 42.6 | 76.6 | 63.2 | 41.5 | 41.5 |
| | <Analytical value> | | | | | | | |
| Before ultrasonication | Maximum particle size before ultrasonication | μm | 148 | 418.6 | 248.9 | 296.0 | 2000.0 | 2000.0 |
| | d50 before ultrasonication | μm | 38.92 | 58.96 | 50.88 | 67.86 | 377.50 | 470.10 |
| | Modal diameter before ultrasonication | μm | 44.00 | 57.06 | 52.33 | 67.86 | 383.90 | 383.90 |
| | Specific surface area (CS) before ultrasonication | m²/mL | 0.176 | 0.114 | 0.126 | 0.093 | 0.027 | 0.015 |
| After ultrasonication | Maximum particle size after ultrasonication | μm | 88 | 104.7 | 271.4 | 248.9 | 352.0 | 352.0 |
| | d50 after ultrasonication | μm | 12.32 | 31.43 | 33.86 | 59.49 | 62.62 | 75.20 |
| | Modal diameter after ultrasonication | μm | 14.27 | 33.93 | 44.00 | 62.23 | 74.00 | 88.00 |
| | Specific surface area (CS) after ultrasonication | : α | m²/mL | 0.584 | 0.223 | 0.238 | 0.108 | 0.144 | 0.143 |
| | <Results of organoleptic evaluation> | | | | | | | |
| | Washability | | 2 | 4 | 3 | 4 | 5 | 5 |
| | Adhesion property | | 1 | 4 | 1 | 4 | 5 | 5 |
| | Shape retainability | | 1 | 4 | 1 | 5 | 5 | 5 |
| | Stability (oil releasability) | | 3 | 4 | 2 | 4 | 5 | 5 |
| | Number of vertical strokes required for general completion of cleaning | Times | 16 | 5 | 9 | 4 | 2 | 2 |
| | θ (contact angle) (20°C) | : β | ° | 32 | 103 | 33 | 67 | 116 | 127 |
| | Sliding angle (20°C) | ° | 40 | 80 | 30 | 80 | 90 or more | 90 or more |
| | Advancing contact angle (tilt angle: 45°) (20°C) | ° | - | 80 | - | 100 | 130 | 130 |
| | 2.6×α+0.03×β | | 2.48 | 3.68 | 1.62 | 2.30 | 3.85 | 4.18 |
| | Measured value of viscosity with Bostwick viscometer (measurement temperature: 20°C, 10 seconds) | cm | 21.0 | 25.0 | 28cm or more | 21.0 | 4.0 | 3.0 |

23

[Table 5]

| <Formulation> | | 19 | 20 | 21 | 22 | 23 | 24 |
|---|---|---|---|---|---|---|---|
| [Edible part] dried carrot | Parts by mass | 200 | 200 | | | | |
| [Edible part] dried pumpkin | Parts by mass | | | | 200 | | |
| [Edible part] dried sweet corn | Parts by mass | | | | | | |
| [Edible part] dried soybean | Parts by mass | | | 200 | | | |
| [Edible part] dried green soybean | Parts by mass | | | | | 200 | |
| [Edible part] rice flour | Parts by mass | | | | | | 200 |
| [Edible part] dried table beet | Parts by mass | | | | | | |
| [Edible part] dried kelp | Parts by mass | | | | | | |
| [Edible part] dried apple | Parts by mass | | | | | | |
| [Inedible part] dried sweet corn (cob) | Parts by mass | | | | | | |
| [Inedible part] dried green soybean (pod) | Parts by mass | | | | | | |
| [Edible part] onion paste (raw) | Parts by mass | | | | | | |
| [Edible part] dried mustard powder | Parts by mass | | | | | | |
| [Edible part] potato flake | Parts by mass | | | | | | |
| Salad oil | Parts by mass | | | | | | |
| Olive oil | Parts by mass | 205 | 80 | 400 | 400 | 400 | 400 |
| Palm oil | Parts by mass | | | | | | |
| Kelp soup stock | Parts by mass | | | | | | |
| Water | Parts by mass | 595 | 720 | 400 | 400 | 400 | 400 |
| Total | Parts by mass | 1000 | 1000 | 1000 | 1000 | 1000 | 1000 |
| Method for size-reducing raw material(s) | | Jet mill | Jet mill | Jet mill | Jet mill | Jet mill | Pin mill |
| Method of size reduction processing (first) | | Cutter mixer | Cutter mixer | Cutter mixer | Cutter mixer | Cutter mixer | Cutter mixer |
| Method of size reduction processing (second) | | - | - | - | - | - | - |
| Measured value | Content of fine food particles | % by mass | 29.8 | 29.9 | 29.6 | 29.7 | 29.6 | 29.7 |
| | Water content of entire composition | % by mass | 61.3 | 73.3 | 42.1 | 42.1 | 42.1 | 41.3 |
| | Total oil/fat content | % by mass | 21.0 | 8.3 | 46.3 | 41.7 | 45.5 | 41.9 |
| <Analytical value> | | | | | | | | |
| Before ultrasonication | Maximum particle size before ultrasonication | μm | 352.0 | 248.9 | 2000.0 | 2000.0 | 592.0 | 352 |
| | d50 before ultrasonication | μm | 78.07 | 50.81 | 164.00 | 314.10 | 49.04 | 31.88 |
| | Modal diameter before ultrasonication | μm | 74.00 | 52.33 | 296.00 | 352.00 | 44.00 | 31.11 |
| | Specific surface area (CS) before ultrasonication | m²/mL | 0.082 | 0.127 | 0.086 | 0.025 | 0.163 | 0.203 |

| | | | | | | | | |
|---|---|---|---|---|---|---|---|---|
| After ultrasonication | Maximum particle size after ultrasonication | μm | 296.0 | 248.9 | 148.0 | 995.6 | 352.0 | 248.9 |
| | d50 after ultrasonication | μm | 65.53 | 33.12 | 18.81 | 69.62 | 34.30 | 11.79 |
| | Modal diameter after ultrasonication | μm | 67.86 | 44.00 | 22.00 | 74.00 | 40.35 | 9.25 |
| | Specific surface area (CS) after ultrasonication | : α   m²/mL | 0.098 | 0.250 | 0.435 | 0.162 | 0.294 | 0.731 |
| | <Results of organoleptic evaluation> | | | | | | | |
| | Washability | | 4 | 3 | 5 | 5 | 4 | 4 |
| | Adhesion property | | 5 | 1 | 5 | 5 | 5 | 4 |
| | Shape retainability | | 5 | 2 | 5 | 5 | 4 | 5 |
| | Stability (oil releasability) | | 5 | 4 | 5 | 5 | 4 | 4 |
| | Number of vertical strokes required for general completion of cleaning | Times | 4 | 9 | 2 | 2 | 4 | 4 |
| | θ (contact angle) (20°C) | : β   ° | 90 | 28 | 147 | 113 | 80 | 116 |
| | Sliding angle (20°C) | ° | 90 or more | 20 | 90 or more | 90 or more | 90 or more | 80 |
| | Advancing contact angle (tilt angle: 45°) (20°C) | ° | 120 | - | 150 | 130 | 120 | 125 |
| | 2.6×α+0.03×β | | 2.95 | 1.49 | 5.53 | 3.80 | 3.15 | 5.38 |
| | Measured value of viscosity with Bostwick viscometer (measurement temperature: 20°C, 10 seconds) | cm | 5.0 | 28cm or more | 5.5 | 3.0 | 10.0 | 0.1 |

[Table 6]

| <Formulation> | | 25 | 26 | 27 | 28 | 29 | 30 | 31 | 32 | 33 | 34 | 35 |
|---|---|---|---|---|---|---|---|---|---|---|---|---|
| [Edible part] dried carrot | Parts by mass | | | | | | | | | | | |
| [Edible part] dried pumpkin | Parts by mass | | | | | | | | | | | |
| [Edible part] dried sweet corn | Parts by mass | | | | 200 | 200 | | | | | | |
| [Edible part] dried soybean | Parts by mass | | 62 | | | | | | 20 | | | |
| [Edible part] dried green soybean | Parts by mass | | | | | | 190 | | | | | |
| [Edible part] rice flour | Parts by mass | | | | | | | | | | | |
| [Edible part] dried table beet | Parts by mass | 200 | | | | | | | | | | |
| [Edible part] dried kelp | Parts by mass | | 5 | | | | | | | | | 120 |
| [Edible part] dried apple | Parts by mass | | | 200 | | | | 110 | | | | |
| [Inedible part] dried sweet corn (cob) | Parts by mass | | | | | | | | | | | |
| [Inedible part] dried green soybean (pod) | Parts by mass | | | | | | 10 | | | | | |
| [Edible part] onion paste (raw) | Parts by mass | | 37 | | | | | | | | | |
| [Edible part] dried mustard powder | Parts by mass | | 8 | | | | | | | | | |
| [Edible part] potato flake | Parts by mass | | 32 | | | | | | | | | |
| [Edible part] fermented sweet potato (raw) | Parts by mass | | | | | | | | | 330 | | |
| [Edible part] dried peach | Parts by mass | | | | | | | | | | 300 | |
| [Edible part] cashew nut | Parts by mass | | | | | | | | 85 | | | |
| Salad oil | Parts by mass | | | 200 | 100 | | | | 600 | 300 | 400 | |
| Olive oil | Parts by mass | 400 | 295 | 200 | 300 | 390 | 400 | 700 | | | | 400 |
| Palm oil | Parts by mass | | | | | 10 | | | | | | |
| Kelp soup stock | Parts by mass | | 144 | | | | | | | | | 50 |
| Vinegar | Parts by mass | | | | | | | | 50 | | 20 | 50 |
| Water | Parts by mass | 400 | 418 | 400 | 400 | 400 | 400 | 190 | 245 | 370 | 280 | 380 |

| | Parts by mass | | | | | | | | | | | |
|---|---|---|---|---|---|---|---|---|---|---|---|---|
| Total | Parts by mass | 1000 | 1000 | 1000 | 1000 | 1000 | 1000 | 1000 | 1000 | 1000 | 1000 | 1000 |
| Method for size-reducing raw material(s) | | Pin mill | Jet mill | Jet mill | Jet mill | Jet mill | Jet mill | Stone mill pulverization mill | Stone mill pulverization mill | Jet mill | Jet mill | Stone mill pulverization mill |
| Method of size reduction processing (first) | | Cutter mixer | High-pressure homogenizer | High-pressure homogenizer | Cutter mixer | Cutter mixer | High-pressure homogenizer | Cutter mixer | Homogenizer | Cutter mixer | Cutter mixer | Cutter mixer |
| Method of size reduction processing (second) | | - | Medium stirring mill | Medium stirring mill | - | - | Medium stirring mill | - | - | - | - | - |
| Measured value — Content of fine food particles | % by mass | 29.7 | 21.3 | 30.3 | 30.5 | 30.6 | 28.2 | 16.2 | 15.5 | 49.1 | 44.5 | 17.8 |
| Measured value — Water content of entire composition | % by mass | 41.3 | 57.8 | 41.5 | 41.8 | 42.1 | 42.1 | 20.1 | 24.6 | 37.0 | 28.0 | 39.3 |
| Measured value — Total oil/fat content | % by mass | 41.9 | 31.7 | 40.7 | 42.2 | 42.5 | 45.3 | 74.2 | 60.5 | 30.0 | 40.0 | 41.7 |
| <Analytical value> | | | | | | | | | | | | |
| Before ultrasonication — Maximum particle size before ultrasonication | μm | 995.6 | 995.6 | 228.2 | 542.9 | 497.8 | 418.6 | 2000.0 | 352.0 | 592.0 | 2000.0 | 1184.0 |
| Before ultrasonication — d50 before ultrasonication | μm | 322.80 | 52.51 | 54.30 | 81.00 | 88.50 | 56.78 | 592.00 | 62.30 | 97.88 | 454.30 | 285.90 |
| Before ultrasonication — Modal diameter before ultrasonication | μm | 187.80 | 47.98 | 47.98 | 62.23 | 67.86 | 52.33 | 418.60 | 62.23 | 114.10 | 383.90 | 383.90 |
| Before ultrasonication — Specific surface area (CS) before ultrasonication | m²/mL | 0.061 | 0.162 | 0.078 | 0.092 | 0.082 | 0.132 | 0.011 | 0.131 | 0.081 | 0.026 | 0.037 |
| After ultrasonication — Maximum particle size after ultrasonication | μm | 704 | 592 | 114.1 | 135.7 | 135.7 | 352.0 | 497.8 | 176.0 | 176.0 | 418.6 | 248.9 |
| After ultrasonication — d50 after ultrasonication | μm | 67.40 | 33.92 | 30.21 | 30.21 | 34.43 | 39.90 | 192.00 | 30.52 | 25.52 | 70.88 | 31.97 |
| After ultrasonication — Modal diameter after ultrasonication | μm | 74.00 | 44.00 | 18.50 | 31.11 | 33.93 | 47.98 | 191.90 | 40.35 | 40.35 | 67.86 | 33.93 |
| After ultrasonication — Specific surface area (CS) after ultrasonication :α | m²/mL | 0.151 | 0.305 | 0.342 | 0.289 | 0.212 | 0.194 | 0.101 | 0.290 | 0.385 | 0.148 | 0.248 |
| <Results of organoleptic evaluation> | | | | | | | | | | | | |
| Washability | | 5 | 4 | 5 | 4 | 4 | 4 | 4 | 4 | 4 | 4 | 4 |
| Adhesion property | | 5 | 5 | 5 | 5 | 5 | 5 | 4 | 4 | 5 | 5 | 4 |
| Shape retainability | | 5 | 5 | 5 | 5 | 5 | 4 | 4 | 4 | 5 | 5 | 4 |
| Stability (oil releasability) | | 5 | 4 | 5 | 5 | 5 | 5 | 4 | 4 | 5 | 5 | 4 |
| Number of vertical strokes required for general completion of cleaning | Times | 2 | 7 | 2 | 4 | 4 | 3 | 8 | 8 | 6 | 7 | 5 |
| θ (contact angle) (20°C) :β | ° | 143 | 110 | 148 | 123 | 117 | 85 | 46 | 121 | 113 | 62 | 67 |
| Sliding angle (20°C) | ° | 90 or more | 90 or more | 90 or more | 90 or more | 90 or more | 90 or more | 55 | 90 or more | 90 or more | 90 or more | 90 or more |
| Advancing contact angle (tilt angle: 45°) (20°C) | ° | 160 | 120 | 105 | 125 | 145 | 130 | 55 | 100 | 100 | 110 | 120 |
| 2.6×α+0.03×β | | 4.69 | 4.09 | 5.33 | 4.45 | 4.07 | 3.07 | 1.65 | 4.37 | 4.38 | 2.24 | 2.67 |
| Measured value of viscosity with Bostwick viscometer (measurement temperature: 20°C, 10 seconds) | cm | 1.5 | 2.0 | 8.0 | 2.0 | 3.0 | 8.0 | 25.0 | 5.0 | 6.0 | 21.0 | 13.0 |

## Claims

1. A paste containing fine food particles, comprising fine food particles of one or more selected from the group consisting of a seed, grain, a legume, an alga, a vegetable and a fruit, and an oil/fat, wherein the paste satisfies all of (1) to (5) and satisfies one or more of (6-1) to (6-3):

    (1) a content of fine food particles is 15% by mass or more and 85% by mass or less;
    (2) a total oil/fat proportion is 20% by mass or more and 75% by mass or less;
    (3) when ultrasonication is carried out, a modal diameter after the treatment is 0.3 μm or more and 200 μm or less;
    (4) a water content is 20% by mass or more and 80% by mass or less;
    (5) a maximum particle size is larger than 100 μm;
    (6-1) a contact angle on a clean glass surface placed horizontally at a measurement temperature of 20°C is 40° or more and 160° or less;

(6-2) a sliding angle on a clean glass surface at a measurement temperature of 20°C is 50° or more; and

(6-3) an advancing contact angle on a clean glass surface at a measurement temperature of 20°C and a tilt angle of 45° is 50° or more.

2. The paste containing fine food particles according to claim 1, wherein, when the ultrasonication is carried out, a specific surface area per unit volume after the treatment is 0.08 $m^2$/mL or more, and the specific surface area per unit volume after the treatment increases by 1.1 times or more compared with that before the treatment.

3. The paste containing fine food particles according to claim 1 or 2, wherein, when the ultrasonication is carried out, the paste satisfies a formula: $\alpha \times 2.6 + \beta \times 0.03 \geq 2.2$ where a specific surface area per unit volume ($m^2$/mL) is $\alpha$ and a contact angle (°) on a clean glass surface at a measurement temperature of 20°C is $\beta$.

4. The paste containing fine food particles according to any one of claims 1 to 3, wherein, when the ultrasonication is carried out, the maximum particle size after the treatment decreases in the range of 10% or more and 95% or less compared with that before the treatment.

5. The paste containing fine food particles according to any one of claims 1 to 4, wherein a modal diameter before the ultrasonication is 20 $\mu$m or more and 400 $\mu$m or less.

6. The paste containing fine food particles according to any one of claims 1 to 5, comprising an edible part as the food.

7. The paste containing fine food particles according to any one of claims 1 to 6, wherein a 50% integrated diameter (median diameter) in the case where the ultrasonication is carried out is 0.3 $\mu$m or more and 150 $\mu$m or less.

8. The paste containing fine food particles according to any one of claims 1 to 7, wherein a viscosity measured with a Bostwick viscometer at a measurement temperature of 20°C for a measuring time of 10 seconds is 0.1 cm or more and 22.0 cm or less.

9. The paste containing fine food particles according to any one of claims 1 to 8, wherein a ratio of the water content to the total oil/fat content is from 1:4 to 4:1.

10. The paste containing fine food particles according to any one of claims 1 to 9, comprising both an edible part and an inedible part originating from the same type of food.

11. The paste containing fine food particles according to any one of claims 1 to 10, obtained by subjecting one or more foods selected from the group consisting of a seed, a grain, a legume, an alga, a vegetable and a fruit to a pulverizing processing in the presence of the oil/fat.

12. The paste containing fine food particles according to claim 11, wherein the food subjected to the pulverizing processing is a dried food.

13. The paste containing fine food particles according to claim 12, wherein the food subjected to the pulverizing processing is a food having a water activity value of 0.95 or less.

14. The paste containing fine food particles according to any one of claims 11 to 13, wherein the pulverizing processing is a medium stirring mill processing and/or a homogenizer treatment.

15. The paste containing fine food particles according to any one of claims 11 to 14, wherein the pulverizing processing is a wet pulverizing processing.

16. A food and drink product comprising the paste containing fine food particles according to any one of claims 1 to 15.

17. A liquid seasoning comprising the paste containing fine food particles according to any one of claims 1 to 15.

18. A method for suppressing oil release during storage of a paste containing fine food particles, the method comprising subjecting, to a size reduction processing, a food-containing mixed liquid containing 10% by mass or more and 70% by mass or less of one or more foods selected from the group consisting of a seed, a grain, a legume, an alga, a vegetable and a fruit, 10% by mass or more and 70% by mass or less of an oil/fat, and 15% by mass or more and 70% by mass or less of water such that a modal diameter in the case where ultrasonication is carried out is 0.3 $\mu$m or more and 200 $\mu$m or less; a maximum particle size before the ultrasonication is larger than 100 $\mu$m; a contact angle on a clean glass surface placed horizontally at a measurement temperature of 20°C is 40° or more and 160° or less; a sliding angle at a measurement temperature of 20°C is 50° or more; and an advancing contact angle at a measurement temperature of 20°C and a tilt angle of 45° is 50° or more.

19. A method for producing a paste containing fine food particles, the method comprising subjecting, to a size reduction processing, a food-containing mixed liquid containing 10% by mass or more and 70% by mass or less of one or more foods selected from the group consisting of a seed, a grain, a legume, an alga, a vegetable and a fruit, 10% by mass or more and 70% by mass or less of an oil/fat, and 15% by mass or more and 70% by mass or less of water such that a modal diameter in the case where ultrasonication is carried out is 0.3 $\mu$m or more and 200 $\mu$m or less; a maximum particle size before the ultrasonication is larger than 100 $\mu$m; a contact angle on a clean glass surface placed horizontally at a measurement temperature of 20°C is 40° or more and 160° or less; a sliding angle at a measurement temperature of 20°C is 50° or more; and an advancing contact angle at a measurement temperature of 20°C and a tilt angle of 45° is 50° or more.

20. The method according to claim 18 or 19, wherein the food subjected to the pulverizing processing is a dried food.

21. The method according to claim 20, wherein the food subjected to the pulverizing processing is a food having a water activity value of 0.95 or less.

22. The method according to any one of claims 18 to 21, wherein the pulverizing processing is a medium stirring mill processing and/or a homogenizer treatment.

23. The method according to any one of claims 18 to 22, wherein the pulverizing processing is a wet pulverizing processing.

24. A paste containing fine food particles obtained through a method comprising subjecting, to a size reduction processing, a food-containing mixed liquid containing 10% by mass or more and 70% by mass or less of one or more foods selected from the group consisting of a seed, a grain, a legume, an alga, a vegetable and a fruit, 10% by mass or more and 70% by mass or less of an oil/fat, and 15% by mass or more and 70% by mass or less of water such that a modal diameter in the case where ultrasonication is carried out is 0.3 $\mu$m or more and 200 $\mu$m or less; a maximum particle size before the ultrasonication is larger than 100 $\mu$m; a contact angle on a clean glass surface placed horizontally at a measurement temperature of 20°C is 40° or more and 160° or less; a sliding angle at a measurement temperature of 20°C is 50° or more; and an advancing contact angle at a measurement temperature of 20°C and a tilt angle of 45° is 50° or more.

## INTERNATIONAL SEARCH REPORT

| | International application No. |
|---|---|
| | PCT/JP2018/025135 |

A. CLASSIFICATION OF SUBJECT MATTER
Int.Cl.   A23L5/00(2016.01)i,   A23L5/30(2016.01)i,   A23L19/00(2016.01)i,
          A23L27/00(2016.01)i, A23L27/10(2016.01)i
According to International Patent Classification (IPC) or to both national classification and IPC

B. FIELDS SEARCHED

Minimum documentation searched (classification system followed by classification symbols)
Int.Cl. A23L5/00, A23L5/30, A23L19/00, A23L27/00, A23L27/10

| Documentation searched other than minimum documentation to the extent that such documents are included in the fields searched | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
JSTPlus/JST7580 (JDreamIII)
CAplus/FSTA/WPIDS (STN)

C. DOCUMENTS CONSIDERED TO BE RELEVANT

| Category* | Citation of document, with indication, where appropriate, of the relevant passages | Relevant to claim No. |
|---|---|---|
| A | JP 2-211844 A (HOUSE FOODS CORPORATION) 23 August 1990, example 1 (Family: none) | 1-24 |
| A | JP 2004-159606 A (NAMISATO CORPORATION) 10 June 2004, examples (Family: none) | 1-24 |
| A | JP 11-290036 A (NAKANO VINEGAR CO., LTD.) 26 October 1999, claim 1 (Family: none) | 1-24 |

☐  Further documents are listed in the continuation of Box C.       ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 September 2018 (10.09.2018) | 18 September 2018 (18.09.2018) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**EP 3 556 221 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006141291 A
- JP 2009543562 A
- JP 2004159606 A
- JP 2003144949 A
- JP 2007268515 A